# EUROPÄISCHE PATENTANMELDUNG

(11) **EP 2 441 363 A1**
(43) Veröffentlichungstag der Anmeldung: **18.04.2012**
(21) Anmeldenummer: 12150022.7
(22) Anmeldetag: 01.03.2010
(51) Int. Cl.: A47J 43/07, B01F 7/00

(54) **Mischeinsatz für einen Rührtopf**

(30) Priorität: 06.03.2009 DE 102009003576
(62) Teilanmeldung aus: 10155055.6
(71) Anmelder: Vorwerk & Co. Interholding GmbH, 42275 Wuppertal (DE)
(72) Erfinder: Liß, Raphael, 53225 Bonn (DE); Mahmudov, Tursun, 140163 Samarkand City (UZ); Schomacher, Jutta, 42489 Wülfrath (DE); Castillo, Thalia Garcia, 27276 Torreón Coahuila (MX)
(74) Vertreter: Müller, Enno

(57) **Zusammenfassung**

Die Erfindung betrifft einen Mischeinsatz (13) für einen Rührtopf (5) eines elektromotorisch betriebenen Küchengerätes (1), insbesondere zur Steckhalterung vorzugsweise auf einem angetriebenen Messersatzes (7) des Rührtopfes (5), mit sich radial und/oder axial erstreckenden Mischelementen (16), wobei ein Schaufelelement (20) vorgesehen ist. Um eine vorteilhafte Schaumausbildung und/oder ein vorteilhaftes Schlagen von Sahne zu erreichen, schlägt die Erfindung vor, dass dem Schaufelelement (20) ein sich horizontal erstreckendes Mischelement (16) zugeordnet ist, das einseitig und zumindest in teilweiser Überdeckung zu dem Schaufelelement (20) angeordnet ist.

## Beschreibung

Die Erfindung betrifft zunächst einen Mischeinsatz für einen Rührtopf eines elektromotorisch betriebenen Küchengeräts, insbesondere zur Steckhalterung vorzugsweise auf einem angetriebenen Messersatz des Rührtopfes, mit sich radial und/oder axial erstreckenden Mischelementen, wobei ein Schaufelelement vorgesehen ist.

Mischeinsätze der in Rede stehenden Art sind bekannt. Diese werden in dem Rührtopf an dem über das Küchengerät angetriebenen, rührtopfseitigen Rührwerk steckgehaltert, zur Drehmitnahme des Mischeinsatzes im Rührbetrieb. Hierbei kann ein gegebenenfalls vorgesehener Messersatz des Rührwerkes in dem Rührtopf verbleiben, so dass sich der Messersatz im Rührbetrieb zusammen mit dem Mischeinsatz dreht. Ein derartiger Mischeinsatz dient mit seinen radial und/oder axial sich erstreckenden Mischelementen insbesondere zur Erstellung homogener Schäume, wie beispielsweise Sahne, Eischnee oder Milchschaum, wobei weiter im Zusammenhang mit einer Erstellung von Milchschaum der Rührtopf bevorzugt zugleich während des Rührbetriebs beheizbar ist.

Ein Küchengerät mit einem Rührtopf, welcher zur Aufnahme eines Mischeinsatzes geeignet ist, ist beispielsweise in der EP 0 757 531 B1 dargestellt und beschrieben.

Aus der US 2007/0221068 A1 ist ein Mischeinsatz für einen Rührtopf eines elektromotorisch betriebenen Küchengerätes bekannt, bei welchem ein inneres Halterungsteil magnetisch ein kreisförmig umlaufendes Wendelelement haltert.

Ausgehend von dem zuletzt genannten Stand der Technik beschäftigt sich die Erfindung mit der Aufgabe, einen Mischeinsatz für einen Rührtopf anzugeben, der eine vorteilhafte Schaumausbildung und/oder ein vorteilhafter Schlagen von Sahne erreichen lässt.

Diese Aufgabe ist beim Gegenstand des Anspruches 1 gelöst, wobei darauf abgestellt ist, dass dem Schaufelelement ein sich horizontal erstreckendes Mischelement zugeordnet ist, das einseitig und zumindest in teilweiser Überdeckung zu dem Schaufelelement angeordnet ist. Es ist eine drehrichtungsabhängige Wirkung der Mischelemente und der Schaufelelemente erreicht, wobei die Mischelemente weiter bevorzugt dem Aufschäumen von Milch und die Schaufelelemente dem Schlagen von Sahne oder dergleichen dienen.

Das sich horizontal erstreckendes Mischelement verläuft in bevorzugter Ausgestaltung mit geringem vertikalen Abstand zum Topfboden, womit ein günstiges Aufschlagen von Sahne oder Eiweiß erreicht ist, darüber hinaus beim Aufschäumen von Milch einem Anbrennen derselben bei temperiertem Rührtopfboden verhindert ist. Weiter erstreckt sich das dem Schaufelelement zugeordnete Mischelement in einer Horizontalebene bis zur Topfwandung, dies unter Belassung eines geringen Spaltes. Die rotierenden, horizontal sich erstreckenden Mischelemente wirken zufolge der vorbeschriebenen Anordnung und Ausrichtung insbesondere in den Bereichen, in denen sich die Sahne bzw. das Eiweiß oder die Milch durch die Rotationskräfte ansammelt. Das geschlagene oder geschäumte Medium breitet sich dabei nach vertikal oben aus, womit durch die sich horizontal erstreckenden Mischelemente und die Schaufelelemente nur die noch nicht geschlagene oder geschäumte Flüssigkeit bearbeitet wird.

Das horizontal ausgerichtete Mischelement erstreckt sich mit Bezug auf die Drehachse des Mischeinsatzes radial. Entsprechend kämmt das Mischelement bei drehendem Mischeinsatz das aufzuschäumende oder zu schlagende Medium quer zu seiner Längserstreckung. Günstige Schaum- oder auch Schlagergebnisse werden zudem erzielt, wenn das Mischelement quer zu einer sich auf die Drehachse beziehenden Radialen ausgerichtet ist, so dass das Mischelement bei Rührwerksdrehung in dessen Längserstreckung windet. In alternativer oder auch kombinativer Ausgestaltung erstreckt sich das Mischelement zumindest kreisabschnittförmig, dies weiter bevorzugt in konzentrischer Ausrichtung zur Mischeinsatz-Drehachse. Ein derartig kreisabschnittförmiges Mischelement ist beispielsweise im Bereich der freien Enden von radial sich erstreckenden Mischelementen festgelegt, womit eine günstige Kombination von insgesamt sich horizontal erstreckenden Mischelementen zum Aufschlagen bzw. Aufschäumen erreicht ist. Das Mischelement erstreckt sich hierbei beispielsweise in einem Vollkreis, alternativ in einem Halbkreis. Darüber hinaus können auch beispielsweise zwei kreisabschnittförmige Mischelemente vorgesehen sein, die in einem Grundriss des Mischeinsatzes betrachtet zwei Viertelkreise bilden, die diametral gegenüberliegend mit Bezug auf die Drehachse angeordnet sind.

In dem Zusammenhang erweist sich eine Ausgestaltung von Vorteil, bei welcher die Mischelemente schraubengangförmig gebildet sind, womit in günstiger Weise zum Aufschäumen von Milch Luft in das Medium eingebracht wird.

Es kann eine änderbar wirksame Beaufschlagungsfläche eines Mischelements vorgesehen sein. Die Beaufschlagungsfläche des Mischelements erstreckt sich quer zur Drehrichtung, weiter bevorzugt in radialer Ausrichtung zur Drehachse des antreibenden Rührwerks. Weiter ist die Beaufschlagungsfläche bevorzugt quer zur Längserstreckung derselben senkrecht ausgerichtet. Eine derart ausgebildete Beaufschlagungsfläche eines Mischelements dient insbesondere zum Schlagen von Sahne oder Eiweiß. Durch eine manuell oder auch selbsttätig herbeigeführte Änderung der Beaufschlagungsfläche, weiter beispielsweise durch eine Änderung der Ausrichtung der Beaufschlagungsfläche ist der Mischeinsatz auch beispielsweise zum Aufschäumen von Milch geeignet. Durch die Änderung der Beaufschlagungsfläche bietet der Mischeinsatz eine gegenüber der Schlagfunktion geringere Angriffsfläche, so dass die Blasen beim Milch aufschäumen nicht durch die Beaufschlagungsfläche des Mischelementes zerstört werden. Zudem wird durch die Änderung der Beaufschlagungsfläche verhindert, dass die aufzuschäumende Milch durch die ansonsten auf diese über die Beaufschlagungsfläche einwirkenden Kräfte nach radial außen gedrängt wird, was bei einem insbesondere bodenbeheizten Rührtopf zu einem Anbrennen der Milch führen könnte. Zufolge der vorgeschlagenen Lösung ist ein Mischeinsatz geschaffen, der die Funktionen von Schlag- und Schaumeinsätzen vereint.

Bevorzugt ist vorgesehen, dass ein Mischelement oder ein Teil eines Mischelementes klappbeweglich oder schwenkbeweglich angeordnet ist. Über diese bewegliche Anordnung des Mischelementes ist die Beaufschlagungsfläche gezielt in ihrer Wirkung änderbar, so insbesondere durch Ein- oder Ausklappen beziehungsweise Ein- oder Ausschwenken des Mischelementes aus einer bevorzugt zum Schäumen von Sahne oder Eiweiß dienenden Stellung in eine bevorzugt zum Aufschäumen von Milch dienenden Stellung oder umgekehrt. Jeder Klapp- bzw. Schwenkstellung des Mischelementes ist eine Mischeinsatzfunktion zugeordnet.

Die Änderung der Beaufschlagungsfläche erfolgt in einer Ausgestaltung durch Eingriff des Benutzers, beispielsweise durch Aus- oder Einklappen des Mischelementes, welche eingenommene Klappstellung beispielsweise rastgehaltert ist. In bevorzugter Ausführung ist in diesem Zusammenhang vorgesehen, dass sich die Änderung der Beaufschlagungsfläche zufolge einer Zusammenwirkung mit einer in dem Rührtopf befindlichen Masse selbsttätig drehrichtungsabhängig einstellt. Entsprechend ist eine Klappbewegung des Mischelementes aus einer ersten Stellung in eine zweite Stellung und zurück abhängig von der Drehrichtung des Mischeinsatzes, welche Drehrichtung über entsprechende Steuermittel des Küchengerätes einstellbar ist. Das infolge der Drehung des Mischeinsatzes auf die Beaufschlagungsfläche einwirkende, in dem Rührtopf befindliche und aufzuschlagende bzw. aufzuschäumende Medium bewirkt eine entsprechende Klappverlagerung des Mischelementes. Die Drehrichtung des Mischeinsatzes ist entsprechend abhängig von dem gewünschten Verarbeitungsvorgang. So ist beispielsweise eine Drehrichtung bevorzugt zum Schlagen von Sahne oder Eiweiß und die entgegengesetzte Drehrichtung geeignet zum Aufschäumen von Milch. Zufolge einer klappbeweglichen Anordnung des Mischelementes bewirkt bei entsprechender Drehrichtung die Masse, insbesondere eine aufzuschäumende Milch oder dergleichen ein Aufklappen des Mischelementes, so dass die Beaufschlagungsfläche des Mischelementes deaktiviert bzw. auf ein Minimum reduziert ist. In hierzu entgegengesetzter Drehrichtung des Mischeinsatzes stützt sich das Mischelement bevorzugt anschlagbegrenzt in einer die Masse aufschlagenden Stellung ab. Hierbei erstreckt sich die Beaufschlagungsfläche bevorzugt radial zur Drehachse und in Vertikalrichtung, während die Beaufschlagungsfläche in entgegengesetzter Drehrichtung insbesondere beim Aufschäumen von Milch bevorzugt in eine zumindest annähernd bodenparallele Position verschwenkt ist. Die Angriffsfläche des aufgeklappten Mischelementes ist in dieser Elementposition lediglich durch die in Drehrichtung weisende Randkante des Mischelementes gegeben, welche in bevorzugter Ausgestaltung zufolge einer gering gewählten Materialstärke des Mischelementes nicht schlagend auf das aufzuschäumende Medium einwirkt. Die beim Aufschäumen des Mediums erzeugten Blasen werden hierdurch nicht zerstört.

Das änderbare Mischelement ist in einer Ausführungsform um eine sich radial erstreckende Achse beweglich, bewegt sich entsprechend bevorzugt drehrichtungsabhängig aus einer radial und vertikal ausgerichteten Stellung in eine Horizontalebenenstellung. Alternativ ist das änderbare Mischelement um eine sich axial erstreckende Achse beweglich zur Veränderung der Stellung aus einer zur Drehrichtung quergerichteten Stellung in eine in Drehrichtung weisende Stellung und umgekehrt.

Es können sich vertikal erstreckende, stabförmige Mischelemente ausgebildet sein, wobei die Mischelemente fußseitig in das radial verlaufende Schaufelelement übergehen und das Schaufelelement über eine vertikale Höhe, die einem Zehntel bis einem Drittel der freien Länge eines Mischelementes entspricht, geschlossen ist. Zufolge dieser vorgeschlagenen Ausgestaltung ist ein Mischeinsatz geschaffen, der insbesondere verbesserte Eigenschaften zum Schlagen von Sahne oder Eiweiß aufweist. Dieser Mischeinsatz erbringt speziell für Sahne oder Eiweiß sehr gute Ergebnisse, weist darüber hinaus auch zum Aufschäumen von Milch günstige Eigenschaften auf. Das fußseitig vorgesehene Schaufelelement erstreckt sich in Zuordnungsstellung des Mischeinsatzes in dem Rührtopf mit geringem vertikalen Abstand zum Rührtopfboden, so insbesondere mit einem Abstand von wenigen Zehntel Millimetern, weiter von 0,1mm bis 2mm und bewirkt zufolge seiner Ausgestaltung und Anordnung ein günstiges Aufschlagen von Sahne und Eiweiß. Das Schaufelelement erstreckt sich hierbei weiter bevorzugt in Radialrichtung über die gesamte freie Topffinnenradiale bis hin zur Innenseite der Topfwandung. Die vertikal sich erstreckenden Mischelemente des Mischeinsatzes sind stabförmig, weiter beispielsweise drahtförmig gestaltet, wobei benachbarte Mischelemente freie Zwischenräume belassen. Diese stabförmigen Mischelemente unterstützen das Schlagen der Sahne oder des Eiweißes, dienen darüber hinaus auch zur Erzeugung von Milchschaum. Zudem wird im Falle eines Schlagens von Sahne oder Eiweiß das Medium in der Bahn gehalten, so dass diese nicht nach radial außen gegen die Topfinnenwand oder nach vertikal oben gegen einen gegebenenfalls vorgesehenen Rührtopfdeckel gespritzt wird. Das Medium wird hierbei gleichermaßen verrührt, vermengt und aufgeschäumt, wobei weiter im Falle der Erzeugung von Milchschaum bei entsprechender Wärmezufuhr bevorzugt über den Rührtopfboden einem Anbrennen des Mediums entgegengewirkt ist. Das radial verlaufende Schaufelelement weist in bevorzugter Ausgestaltung eine vertikale Höhe von 6mm bis 12mm, weiter bevorzugt von etwa 10mm auf, woraus weiter zufolge des vorbeschriebenen Verhältnisses eine vertikale Höhe bzw. freie Länge eines stabförmigen Mischelements von etwa 20mm bis 120mm resultiert.

Die vorbeschriebene Ausgestaltung ist auch in Kombination mit dem Mischelement mit änderbarer Beaufschlagungsfläche von Bedeutung. In diesem Fall kann das radial verlaufende, fußseitig an den stabförmigen Mischelementen angeordnete Schaufelelement eine änderbar wirksame Beaufschlagungsfläche aufweisen. Die Klappachse des Schaufelelements erstreckt sich hierbei bevorzugt in radialer Richtung, wobei weiter die stabförmigen Mischelemente sich über die Klappachsenebene des Schaufelelements hinaus nach unten in Richtung auf den Rührtopfboden erstrecken, weiter somit auch einen Anschlag für das Schaufelelement in der Nutzungsstellung zum Schlagen von Sahne und Eiweiß bietend.

Die stabförmigen oder drahtartigen Mischelemente weisen in bevorzugter Ausgestaltung eine freie Länge, das heißt im Betriebszustand eine zumindest annähernd vertikale Erstreckung von mindestens 20mm auf, weiter bevorzugt von etwa 50mm. Die Länge der stabförmigen Mischelemente ist so gewählt, dass die ggf. freien Enden aus der zu schlagenden oder zu schäumenden Flüssigkeit herausragen. Die beim Schäumen von Milch insbesondere wirksamen stabförmigen Mischelemente spalten die Milch bzw. das aufzuschäumende Medium auf und fügen diesem Luft zu. In bevorzugter Ausgestaltung sind die stabförmigen Mischelemente einstückig materialeinheitlich mit dem Schaufelelement insbesondere bei einer nicht verschwenkbaren Ausgestaltung des Schaufelelements ausgebildet, weiter bevorzugt als Kunststoffteil hergestellt im Kunststoffspritzverfahren. In alternativer Ausgestaltung können die stabförmigen Mischelemente auch aus Drähten gestaltet sein, die weiter bevorzugt kunststoffummantelt sind.

Die Mischelemente verlaufen in einer Ausgestaltung parallel zueinander unter Belassung eines Abstandes zwischen zwei nebeneinander angeordneten Mischelementen. Der Abstand zwischen den Mischelementen ist bevorzugt gleich gestaltet oder mit in radialer Richtung größer werdendem Abstand ausgebildet, wobei der gewählte Abstand in Abhängigkeit zu der Stabstärke der einheitlich gestalteten Mischelemente gewählt ist. So beträgt der Abstand der parallel verlaufenden Mischelemente zueinander bei einer Stabstärke von beispielsweise 1,5mm etwa 10mm. Bei Verwendung von durchmessergrößeren Mischelementen ist der Abstand größer gewählt. So ist ein Abstand bevorzugt, der etwa dem Vier- bis Zehn-Fachen des Stabdurchmessers entspricht. Das radial äußere stabförmige Mischelement ist mit radialem Abstand zur inneren Rührtopfwandung positioniert, wobei der Abstand etwa dem Abstand zweier benachbarter Mischelemente zueinander entspricht, so beispielsweise 10mm bis 12mm.

Der Mischeinsatz ist in bevorzugter Ausgestaltung mit zwei achsensymm-trisch gegenüberliegenden Mischeinsatz-Abschnitten versehen, die gleich gestaltet sind. Entsprechend weist der Mischeinsatz zwei in Radialrichtung verlaufende Schaufelelemente auf, von denen sich nach vertikal oben jeweils stabförmige Mischelemente erstrecken. In diesem Zusammenhang erweist es sich von Vorteil, wenn bezüglich einer Rotationsachse gegenüberliegende Mischelemente nach oben divergieren derart, dass der Abstand zwischen diesen Mischelementen im Bereich der Schaufelelemente kleiner ist als im freien Endbereich der Mischelemente. So verlaufen die stabförmigen Mischelemente in einem spitzen Winkel zu einer Achsparallelen, weiter beispielsweise unter Einschluss eines Winkels von 1° bis 15°.

In einer weiteren Ausgestaltung verlaufen die Mischelemente bezogen auf eine Mischelemente-Vertikalachse wellenförmig. Die Wellen schneiden hierbei im Zuge der Vertikalerstreckung des Mischelementes mehrfach die Mischelemente-Vertikalachse, dies bevorzugt unter zweidimensionaler Wellenausrichtung, alternativ aber auch in dreidimensionalem Wellenverlauf. So ist in einer alternativen Ausgestaltung das Mischelement federgangartig geformt.

Eine weitere günstige Ausführungsform des Mischeinsatzes sieht eine bügelartige Ausbildung des Mischelementes vor, mit einer Bügelebene, die im Querschnitt in einem Winkel zu einer Schaufelelementebene steht. So erstreckt sich das bügelartige Mischelement beispielsweise bei horizontaler Ausrichtung des Schaufelelementes vertikal oder in einem spitzen Winkel zur Vertikalen bis hin zu einem spitzen Winkel zur Schaufelelementebene. Zufolge dieser Ausgestaltung erstreckt sich das bügelartige Mischelement in einer Horizontalprojektion auf die Schaufelelementebene zumindest mit Bezug auf eine Drehrichtung der Mischeinsatzes bei Festlegung des Mischelementes in Überdeckung zu der Schaufelelementebene über das Schaufelelement hinaus, eilt entsprechend dem Schaufelelement in einer Drehrichtung des Mischeinsatzes vor bzw. in der entgegengerichteten Drehrichtung diesem nach. Hierdurch wird ein verbessertes Schlag- bzw. Schaumergebnis erreicht. Der Bügel ist weiter bevorzugt umlaufend geschlossen, so dass das Mischelement zwei in der jeweiligen Drehrichtung über das Schaufelelement hinausragende Bügelabschnitte aufweist, die in weiter bevorzugter Ausgestaltung in einer gemeinsam aufgespannten Ebene verlaufen.

Die in Drehrichtung vorderen Bügelabschnitte sind in einer Ausführungsform unterschiedlich gestaltet zu den in Drehrichtung hinteren Bügelabschnitten, so dass in Abhängigkeit von der Drehrichtung unterschiedliche Bügelabschnitte zunächst zur Wirkung kommen. Die unterschiedlichen Bügelabschnitte sind ausgelegt auf das jeweils zu erzielende Ergebnis. So dient ein Bügelabschnitt des umlaufend geschlossenen Bügels zur Unterstützung beim Schlagen von Sahne oder Eiweiß durch das Schaufelelement, während der in Drehrichtung gegenüberliegende Bügelabschnitt bei entgegengerichteter Drehrichtung genutzt wird zum Aufschäumen von Milch oder dergleichen. So ist ein Bügelabschnitt stabförmig gebildet, während der andere Bügelabschnitt wellenförmig, weiter beispielsweise federgangartig geformt ist. Auch hierbei ist eine drehrichtungsabhängige Wirkungsweise des Mischeinsatzes gegeben, wobei beim Schlagen von Sahne oder Eiweiß in Drehrichtung betrachtet zunächst der stabförmige Bügelabschnitt wirkt und hiernach der wellenförmige Bügelabschnitt folgt. Der stabförmige Bügelabschnitt schlägt hierbei das Medium, während der wellenförmige, beispielsweise federartige Bügelabschnitt nicht nennenswert dazu beiträgt. Beim Aufschäumen von Milch oder dergleichen hingegen bewirkt der nach Drehrichtungsänderung nunmehr voreilende, wellenförmige Bügelabschnitt ein Durchmischen des Mediums mit Luft zum Aufschäumen desselben.

Weiter vorteilhaft erweist sich eine Ausgestaltung, bei welcher ein radial äußeres, vertikal verlaufendes Mischelement betrachtet von radial innen konkav gekrümmt verläuft. Dieses Mischelement, welches wie beschrieben stabartig oder auch bügelartig ausgestaltet sein kann, schlägt in einer Drehrichtung bevorzugt die durch die Zirkulation im Rührtopf wandungsinnenseitig des Topfes anhaftende Sahne oder Eiweiß wieder in den schlagenden Kreislauf zurück. Auch die durch die zentrale Anordnung an die Rührwand gedrängte Milch im Aufschäumbetrieb wird über das radial äußere Mischelement aufgeschäumt.

In weiter alternativer Ausgestaltung können die stabförmigen Mischelemente auch in Art eines feinmaschigen Drahtgitters ausgebildet sein, so weiter mit zu den im wesentlichen sich vertikal erstreckenden stabförmigen Mischelementen quer angeordneten Mischelementen, dies weiter bevorzugt mit einer Maschenweite von 0,5mm bis 3mm.

Weitere Merkmale der Erfindung sind nachstehend, auch in der Figurenbeschreibung, oftmals in ihrer bevorzugten Zuordnung zum Gegenstand des Anspruches 16 und/oder des weiteren unabhängigen Anspruches 6 oder zu Merkmalen weiterer Ansprüche erläutert. Sie können aber auch in einer Zuordnung zu nur einzelnen Merkmalen des Anspruches 16 und/oder des Anspruches 6 oder des jeweiligen weiteren Anspruches oder jeweils unabhängig von Bedeutung sein.

Ein günstige Kombination zum Schlagen von Sahne oder Eiweiß und zum Aufschäumen von Milch ist in einer Ausführungsform dadurch erreicht, dass das Mischelement einseitig und zumindest in teilweiser Überdeckung zu dem Schaufelelement angeordnet ist. So ist auch hier eine drehrichtungsabhängige Wirkung der Mischelemente und der Schaufelelemente erreicht, wobei die Mischelemente weiter bevorzugt dem Aufschäumen von Milch und die Schaufelelemente dem Schlagen von Sahne oder dergleichen dienen. In diesem Zusammenhang erweist sich eine Ausgestaltung von Vorteil, bei welcher die Mischelemente schraubengangförmig gebildet sind, womit in günstiger Weise zum Aufschäumen von Milch Luft in das Medium eingebracht wird.

Ein schraubengangförmiges Mischelement weist bevorzugt eine Federform auf, so weitere eine zylindrische oder konische Federform, weiter gegebenenfalls mit sich veränderlichem Durchmesser mit Bezug auf die Längserstreckung des Mischelements. Alternativ zu einer Feder kann auch ein Gitter, gefügt zu einer zylindrischen Form Verwendung finden. Auch hierbei wird, wie bei einer schraubengangförmigen Ausgestaltung des Mischelementes die Milch durch das Gitter gedrückt und aufgeschäumt.

Es können zwei radial und gegenüberliegend verlaufende Mischarme vorgesehen sein, die mit quer zur Erstreckung der Mischarme ausgerichteten Mischelementen versehen sind. Die Mischelemente sind entsprechend zum Schäumen oder Schlagen von Medien ausgelegt, so beispielsweise zum Aufschäumen von Milch mit einer Feinstrukturierung versehen. Durch die Ausrichtung der Mischelemente quer zur Erstreckung der Mischarme bieten sich hier insbesondere Mischelemente zum Aufschäumen von Milch oder dergleichen an, so weiter beispielsweise federgangartig, schraubengangförmige Mischelemente mit zylindrischer oder auch konischer Federform. So ist ein Mischeinsatz erreicht, der bei Rotation geringe Angriffsflächen für das zu bearbeitende Medium, insbesondere für die aufzuschäumende Milch bietet. Die Mischarme, insbesondere die die Mischelemente tragenden Mischarmabschnitte erstrecken sich in einem vertikalen Abstand von 5mm bis 15mm, bevorzugt 10mm zu der zugeordneten Oberfläche des Rührtopfbodens, weiter bevorzugt mit einem Abstand von bis zu 10mm, womit einem Anbrennen von Milch bei entsprechender Hitzeeinwirkung über den Rührtopfboden entgegengewirkt ist. Jeder Mischarm trägt ggf. mehrere quer zur Erstreckung des Mischarmes ausgerichtete Mischelemente, die in weiterer Ausgestaltung parallel zueinander ausgerichtet sind.

In einer bevorzugten Ausgestaltung ist vorgesehen, dass die Mischelemente horizontal ausgerichtet sind, das heißt weiter im Betriebszustand in topfbodenparalleler Ausrichtung. In alternativer Ausgestaltung erstrecken sich die Mischelemente in einer Ebene, die spitzwinklig zur Rührtopfbodenebene verläuft.

Ein günstiges Schaumergebnis wird erreicht durch eine Anordnung von mehr als zwei Mischarmen, so weiter bevorzugt von vier kreuzweise sich zueinander erstreckenden Mischarmen, die in einem Grundriss des Mischeinsatzes betrachtet in Umfangsrichtung gleichmäßig verteilt angeordnet sind.

Die Mischarme, insbesondere die die Mischelemente tragenden Mischarmabschnitte verlaufen weiter bevorzugt in unterschiedlichen vertikalen Höhen, womit entsprechend auch die Mischelemente in unterschiedlichen Ebenen auf das zu bearbeitende Medium einwirken. In diesem Zusammenhang erweist es sich weiter von Vorteil, wenn je zwei Mischarme auf einer Höhe oder bis zu 3mm versetzt verlaufen, weiter bevorzugt jeweils zwei gegenüberliegend verlaufende Mischarme. Der Höhenunterschied der Mischarme zueinander beträgt bevorzugt 3mm bis 15mm, weiter bevorzugt 6mm bis 10mm.

Die Mischarme können eine oder mehrere Mischelemente aufweisen. Günstig erweist sich eine Ausgestaltung, bei welcher ein gegenüberliegend angeordnetes Mischarmepaar mit jeweils einem Mischelement und ein Mischarmepaar mit jeweils zwei Mischelementen versehen ist. Ein günstiges Schaumergebnis wird erreicht, wenn das vertikal untere Mischarmepaar mit nur zwei Mischelementen und das höher gelegene Mischarmepaar mit einem Mischelement versehen sind. Die Mischarme mit zwei Mischelementen wirken dabei nur bei größeren Mengen von aufzuschäumendem Medium.

Bei einer bevorzugten Ausgestaltung der Mischelemente in Schraubengang- bzw. Federgangform gibt der Abstand zwischen den Windungen in etwa die Blasengröße im Schaum wieder. Großer Abstand ergibt entsprechend große instabile Blasen. Ein kleiner Abstand führt zu kleinen Schaumblasen. Zu große oder auch zu kleine Schaumblasen verringern die Schaumqualität. Daher ist ein Windungsabstand von 0,5mm bis 3mm bevorzugt.

Die Mischelemente an den Mischarmen können auch leicht schräg zu einer horizontalen Ebene angebracht sein, dies in einem Winkel von bis zu 30° zur Horizontalebene oder alternativ in einem Winkel bis hin zu 30° zu einer Vertikalebene.

Der Mischeinsatz kann axial gegenüberliegend zwei Aufsteckbereiche aufweisen. Diese sind symmetrisch angeordnet, zur wahlweisen Steckhalterung auf dem rührtopfseitigen Messersatz bzw. auf das Rührwerk. So sind je nach Steckzuordnung für die jeweilige Bearbeitung (Aufschäumen oder Schlagen) entsprechend ausgeformte Aufsteckbereiche dem zu bearbeitenden Medium zuordbar, womit eine günstige Lösung sowohl zum Schlagen von Sahne/Eiweiß und zum Schäumen bspw. von Milch erreicht ist, dies weiter bevorzugt in Form eines einteiligen Mischeinsatzes.

Zufolge der zwei Aufsteckbereiche können rührtopfbodenseitig je nach Steckrichtung unterschiedliche Mischelemente angeordnet sein, zur angepassten Zuordnung von Mischelementen zu der durchzuführenden Medienbearbeitung. So sind dem Topfboden beispielsweise zum Schlagen von Sahne oder Eiweiß entsprechende Mischelemente zugeordnet, so beispielsweise stabförmige Mischelemente, welche fußseitig in radial verlaufende Schaufelelemente übergehen. Zum Aufschäumen von Milch oder dergleichen werden insbesondere durch Umstecken des Mischeinsatzes entsprechend ausgelegte Mischelemente dem Rührtopfboden zugeordnet, so weiter beispielsweise schraubengang- bzw. federgangartige Mischelemente. Zufolge der symmetrischen Ausgestaltung der Aufsteckbereiche und den den Aufsteckbereichen zugeordneten, speziell auf den Bearbeitungsvorgang ausgelegten Mischelementen ist jeweils mittels nur eines Mischeinsatzes ein auf die Bearbeitung des Mediums abgestimmter Mischelemente-Satz in die aktive Stellung bringbar.

Der Mischeinsatz weist in bevorzugter Ausgestaltung in übereinander liegenden Bereichen unterschiedlich orientierte Mischelemente auf. Diese Mischelemente können gleich gestaltet sein, sind jedoch bevorzugt unterschiedlich ausgeformt und sind radial und/oder axial mit Bezug auf die Mischeinsatzachse angeordnet, weiter unter Einschluss eines spitzen oder stumpfen Winkels zu einer Horizontal- oder Vertikalebene, darüber hinaus gegebenenfalls ausgerichtet in Umfangsrichtung. So kann ein Mischeinsatz beispielsweise radial und axial ausgerichtete Mischelemente aufweisen, weiter beispielsweise axial und in Umfangsrichtung oder auch radial und in Umfangsrichtung ausgerichtete Mischelemente.

Ein oder mehrere Mischelemente können zwischen horizontal verlaufenden, vertikal beabstandeten und kreisscheibenförmigen Plattenteilen eingefasst sein, deren Drehachse die Rotationsachse des Rührwerks ist. Die Mischelemente sind hierbei bevorzugt drehfest mit den kreisscheibenförmigen Plattenteilen verbunden. Entsprechend drehen sich Mischelemente und Plattenteile gemeinsam im Betrieb des Mischeinsatzes, wobei im wesentlichen eine Bearbeitung des Mediums im Mischelementebereich, das heißt zwischen den vertikal beabstandeten Plattenteilen erfolgt. Zwischen dem umlaufenden Rand der Plattenteile und der zugewandten Rührtopfinnenwandung verbleibt in einer bevorzugten Ausgestaltung ein Ringspalt, mit einem Spaltmaß von 2mm bis 20mm, weiter bevorzugt von 5mm bis 15mm.

In einer bevorzugten Ausgestaltung ist vorgesehen, dass das obere Plattenteil vollständig geschlossen ausgebildet ist. Entsprechend formt das obere Plattenteil einen Deckenabschnitt des Mischeinsatzes aus. Das untere Plattenteil weist hingegen eine Einlauföffnung auf, die sich umgebend zu dem Rührwerk erstreckt, weiter entsprechend bevorzugt zentral im unteren Plattenteil ausgebildet ist. Die Einlauföffnung ist bevorzugt kreisscheibenförmig gestaltet, mit einem Durchmesser, der größer gewählt ist als der Durchmesser des Rührwerks, weiter insbesondere größer als ein Aufsteckabschnitt des Rührwerks. Zufolge dieser Ausgestaltung ergibt sich ein zumindest annähernd kreisringförmiger Einlassbereich, der nach unten in Richtung auf den Rührtopfboden weisend den Eintritt des zu bearbeitenden Mediums in den Bereich der zwischen den Plattenteilen angeordneten Mischelemente erlaubt.

Das untere Plattenteil ist in einem mittleren Bereich bevorzugt trichterförmig nach unten ausgeformt, so weiter von der Einlauföffnung ausgehend in einem Querschnitt nach radial außen ansteigend unter zunehmender Beabstandung zum Rührtopfboden.

Ein Mischelement ist weiter bevorzugt als ein, die Plattenteile distanzierender, vertikaler Steg ausgebildet, mit einer quer zur Mischeinsatzachse betrachteten Stegdicke, die dem 0,2- bis 1-Fachen des lichten, axialen Abstandes der Plattenteile zueinander entspricht. Die Mischelemente sind hierbei ausgehend von der zentralen Einlauföffnung im wesentlichen radial ausgerichtet, womit der so gestaltete Mischeinsatz gebläseradartig, weiter radial-gebläseradartig gestaltet ist. Die zwischen den Mischelementen verbleibenden Freiräume münden frei nach radial außen. In einer weiter günstigen Ausgestaltung verlaufen die Mischelemente in Radialrichtung spiralförmig in Art eines Radialen-Gebläses.

Im Betrieb des Mischeinsatzes wird über die zentrale Einlauföffnung von unten Luft aus dem Rührtopf gesogen, welche durch die Rotation des Mischeinsatzes nach radial außen gegen die Rührtopfwandung gepresst wird und so die Flüssigkeit aufschäumt. Hierbei wird die Luft beispielsweise in die Milch gepresst, wobei ein feiner Milchschaum entsteht. Auch ist ein derartiges Mischelement zum Schlagen von Sahne geeignet, da auch die flüssige Sahne mit Luft durchsetzt und hierdurch geschlagen wird.

Als besonders vorteilhaft erweist sich eine Weiterbildung, bei welcher die beiden vertikal distanzierten Plattenteile zusammen vertikal bewegbar zu dem Rührwerk angeordnet sind, weiter zusammen mit dem zwischen den Plattenteilen angeordneten Mischelementen. In einer Grundstellung ist der Mischeinsatz mit geringem Abstand zum Rührtopfboden angeordnet, alternativ mit geringem Abstand über der im Rührtopf befindlichen, noch ruhenden Flüssigkeit. Mit der Volumenausbreitung der Flüssigkeit zufolge Aufschäumen bzw. Schlagen bewegt sich der Mischeinsatz nach vertikal oben.

Die jeweils angegebenen zahlenmäßigen Bandbreiten schließen auch - soweit solche nicht ohnehin exemplarisch angegeben sind - sämtliche Zwischenwerte ein und zwar insbesondere in Ein-Zehntel-Schritten von der unteren und/oder oberen Grenze auf die jeweils andere Grenze hin eingeschränkt. "Und" steht hierbei dafür, dass beide Grenzen um jeweils ein oder mehrere Zehntel auf die Grenze hin verschoben, das heißt eingegrenzt werden.

Nachstehend ist die Erfindung anhand der beigefügten Zeichnung, welche lediglich Ausführungsbeispiele darstellt, näher erläutert.

Es zeigt:
- Fig. 1: ein Küchengerät in partiell aufgeschnittener Seitenansicht mit einem in dem Rührtopf angeordneten Mischeinsatz in einer ersten Ausführungsform;
- Fig. 2: den Querschnitt durch den Rührtopf mit Blick auf den an einem Messersatz des Rührtopfes steckgehalterten Mischeinsatz;
- Fig. 3: die Herausvergrößerung des geschnitten dargestellten Rührtopfbodenbereiches bei Drehantrieb des Mischeinsatzes in einer Drehrichtung;
- Fig. 4: eine der Fig. 3 entsprechende Darstellung, jedoch bei entgegengesetzter Drehrichtung;
- Fig. 5: den Schnitt gemäß der Linie V - V in Fig. 3;
- Fig. 6: eine Darstellung gemäß Fig. 5, jedoch den Schnitt gemäß der Linie VI - VI in Fig. 4 betreffend;
- Fig. 7: eine weitere der Fig. 3 entsprechende Darstellung, jedoch eine zweite Ausführungsform des Mischeinsatzes betreffend;
- Fig. 8: den Mischeinsatz in einer dritten Ausführungsform in einer Darstellung gemäß Fig. 3;
- Fig. 9: den Schnitt gemäß der Linie IX - IX in Fig. 8;
- Fig. 10: eine weitere der Fig. 3 entsprechende Darstellung, mit einem Mischeinsatz in einer vierten Ausführungsform;
- Fig. 11: den Schnitt gemäß der Linie XI - XI in Fig. 10;
- Fig. 12: in einer fünften Ausführungsform den Mischeinsatz in einer Darstellung gemäß Fig. 3;
- Fig. 13: den Schnitt gemäß der Linie XIII - XIII in Fig. 12;
- Fig. 14: den Mischeinsatz in einer sechsten Ausführungsform in einer Darstellung gemäß Fig. 3;
- Fig. 15: den Schnitt gemäß der Linie XV - XV in Fig. 14;
- Fig. 16: den Mischeinsatz gemäß Fig. 3, jedoch eine siebte Ausführungsform betreffend;
- Fig. 17: den Horizontalschnitt gemäß der Linie XVII - XVII in Fig. 16;
- Fig. 18: eine achte Ausführungsform des Mischeinsatzes in einer Darstellung gemäß Fig. 3;
- Fig. 19: den Schnitt gemäß der Linie XIX - XIX in Fig. 18;
- Fig. 20: die Draufsicht auf den Mischeinsatz der achten Ausführungsform in Steckzuordnungsstellung zu dem rührtopfseitigen Messersatz;
- Fig. 21: in einer neunten Ausführungsform den Mischeinsatz in einer Darstellung gemäß Fig. 3;
- Fig. 22: den Schnitt gemäß der Linie XXII - XXII unter Fortlassung des Rührtopfes und des rührtopfseitigen Messersatzes;
- Fig. 23: den Mischeinsatz in einer zehnten Ausführungsform in einer Seitenansicht, eine erste Stellung der mischeinsatzseitigen Mischelemente betreffend;
- Fig. 24: eine der Fig. 23 entsprechende Darstellung, jedoch eine zweite Stellung der Mischelemente betreffend;
- Fig. 25: in einer Darstellung gemäß Fig. 3 ein Mischeinsatz in einer elften Ausführungsform, betreffend einen kombinierten Mischeinsatz in einer ersten Steckzuordnungsstellung zum rührtopfseitigen Messersatz;
- Fig. 26: den Schnitt gemäß der Linie XXVI - XXVI in Fig. 25;
- Fig. 27: eine der Fig. 25 entsprechende Darstellung, jedoch eine zweite Steckzuordnungsstellung des Mischeinsatzes betreffend;
- Fig. 28: den Mischeinsatz in einer Darstellung gemäß Fig. 3, eine zwölfte Ausführungsform betreffend;
- Fig. 29: den Horizontalschnitt gemäß der Linie XXIX - XXIX in Fig. 28;
- Fig. 30: eine der Fig. 28 entsprechende Darstellung, den Mischeinsatz in einer höhenverlagerbaren Ausführung betreffend und
- Fig. 31: den Schnitt gemäß der Linie XXXI -XXXI in Fig. 30.

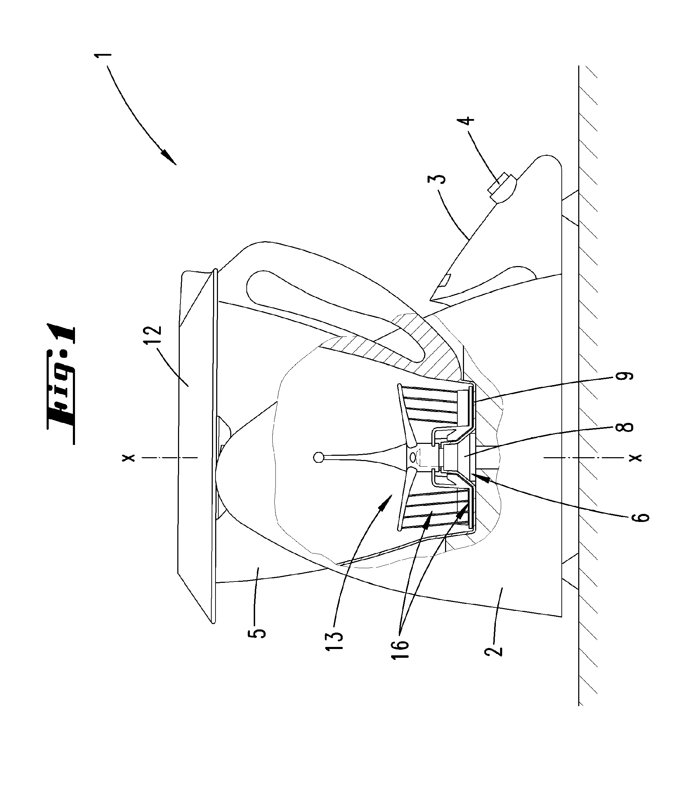

Dargestellt und beschrieben ist zunächst mit Bezug zu Fig. 1 ein Küchengerät 1 mit einem Gehäuse 2, welch letzteres ein Bedienfeld 3 aufweist. Dieses Bedienfeld 3 trägt einen Drehzahlsteller 4, weiter bevorzugt einen nicht dargestellten Temperaturwähler.

Des weiteren weist das Gehäuse 2 einen Aufnahmebereich für einen abnehmbaren und bevorzugt beheizbaren Rührtopf 5 auf. Letzterer ist mit einem Rührwerk 6 versehen, welches über eine nicht näher dargestellte Kupplung und einer rührwerkseitigen Antriebswelle 8 bei in dem Aufnahmebereich eingesetztem Rührtopf 5 mit einem, über den Drehzahlsteller 4 regelbaren Elektromotor in Verbindung steht.

Der Topfboden 9 des Rührtopfes 5 ist flach und im wesentlichen eben ausgebildet, wobei weiter in diesen Topfboden bevorzugt ein über den Temperaturwähler regelbares Widerstands-Heizelement beispielsweise in Form einer Dickschichtheizung integriert ist.

Die senkrecht zum Topfboden 9 ausgerichtete Rührwerkachse x durchsetzt den Topfboden 9 mittig. Eine Festelegung des Rührwerkes 6 an dem Topfboden 9 erfolgt mittels Verspannung.

Das Rührwerk 6 ist als Messersatz 7 ausgebildet, mit einem ersten unteren Messer 10 und einem zweiten oberen Messer 11.

Insbesondere im betriebsbereiten Zustand gemäß Figur 1 ist der Rührtopf 5 mittels eines Deckels 12 verschlossen. Dieser weist eine, die Rührwerkachse x mittig aufnehmende, nicht dargestellte Einfüllöffnung auf.

Das Rührwerk 6 bzw. der Messersatz 7 dient zur Zerkleinerung und/oder Vermengung von in dem Rührtopf 5 befindlichem Rührgut.

Um das Rührwerk 6 bzw. den Rührtopf 5 weiter auch zum Schlagen von Sahne oder Eiweiß, weiter auch zum Aufschäumen von Milch nutzen zu können, ist dem Rührwerk 6 bzw. dem Messersatz 7 ein Mischeinsatz 13 zuordbar.

Die nachfolgend beschriebenen Ausführungsbeispiele eines Mischeinsatzes 13 sind grundsätzlich zur drehfesten Steckanordnung an dem Messersatz 7 ausgelegt. Hierzu weist der jeweilige Mischeinsatz 13 zunächst einen zentralen Steckhalterungsabschnitt 14 auf. Dieser ist im wesentlichen als Aufsteckhülse gebildet, mit zum drehfesten Steckaufsetzen auf einem über die Festlegungsebene des Messersatzes 7 hinausragenden Antriebswellenabschnitt 15. Dieser ist bevorzugt, wie auch entsprechend die Aufnahme des Steckhalterungsabschnittes 14, im Querschnitt unrund gestaltet, zur drehfesten Anordnung des Mischeinsatzes 13 auf dem Antriebswellenabschnitt 15. Weiter ist die Steckzuordnung lageorientiert derart, dass die Mischelemente 16 des Mischeinsatzes 13 in einer Projektion betrachtet auf den Rührtopfboden 9 in dem Bereich zwischen zwei in Umfangsrichtung benachbarten Messern 10, 11 angeordnet sind.

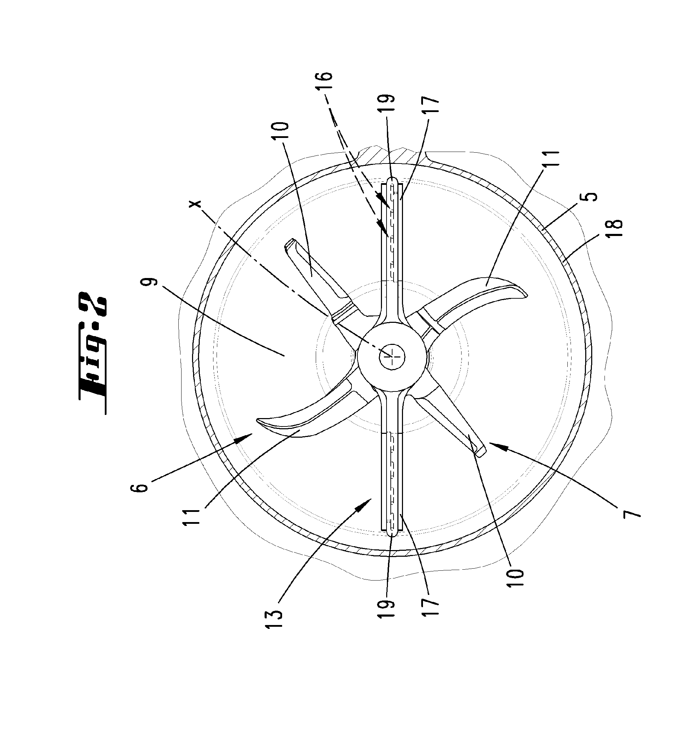

Das in den Figuren 1 bis 6 dargestellte erste Ausführungsbeispiel eines Mischeinsatzes 13 ist ausgelegt sowohl zum Schlagen von Sahne und/ oder Eiweiß als auch zum Aufschäumen von Milch, wobei beim Aufschäumen von Milch bevorzugt zugleich über die in dem Topfboden 9 integrierte Heizung die Milch aufgewärmt wird.

Der Mischeinsatz 13 der ersten Ausführungsform ist mit unterschiedlich gestalteten und ausgerichteten Mischelementen 16 versehen.

An dem Steckhalterungsabschnitt 14 sind in diametraler Gegenüberlage zunächst Tragarme 17 angeformt, die mit geringem Abstand zum Antriebswellenabschnitt 15 nach radial außen geführt sind und mit geringem Abstand zum Topfboden 9 verlaufen. Die dem Topfboden 9 zugeordneten freien Abschnitte der Tragarme 17 erstrecken sich in einer zum Topfboden 9 verlaufenden Parallelebene, wobei der vertikale Abstand zum Topfboden 9 etwa angepasst ist an die in vertikaler Richtung betrachtete Materialstärke der Tragarme 17, so in dem dargestellten Ausführungsbeispiel etwa 2mm bis 4mm. Weiter erstrecken sich die Tragarme 17 in Radialrichtung unter Belassung eines radialen Abstandes zur Rührtopfwandung 18, welcher radiale Abstand etwa dem Zwei-Fachen des vertikalen Abstandes zwischen Tragarmen 17 und Topfboden 9 entspricht.

In den Tragarmen 17 wurzeln jeweils stabförmige Mischelemente 16', so weiter in dem dargestellten Ausführungsbeispiel je Tragarm 17 vier derartiger Mischelemente 16'. Letztere verlaufen parallel zueinander ausgerichtet, unter Belassung von gleichen, in radialer Richtung betrachteten Abständen.

Die stabförmigen Mischelemente 16' sind unter Einschluss eines spitzen Winkels von etwa 10° zu einer Achsparallelen ausgerichtet, hierbei weiter gegenüber einer Achsparallelen geneigt in Richtung auf die Rührtopfwandung 18, woraus sich zufolge der diametral gegenüberliegenden Anordnung von Mischelementen 16' ein divergierender Verlauf der Mischelemente 16' mit Bezug auf die Rotationsachse ergibt.

Die den Tragarmen 17 gegenüberliegenden Enden der Mischelemente 16' sind festgelegt in radial von dem Steckhalterungsabschnitt 14 des Mischeinsatzes 13 auskragenden Halterungsarmen 19, die im wesentlichen in einem spitzen Winkel zu einer Horizontalebene verlaufen, dies ausgehend vom Steckhalterungsabschnitt 14 nach radial außen ansteigend unter Belassung eines radialen Abstandes zwischen den freien Enden der Halterungsarme 19 und der Rührtopfwandung 18.

Die Mischelemente 16' sind zufolge dieser Anordnung zwischen den Halterungsarmen 19 und den fußseitigen Tragarmen 17 gespannt, formen entsprechend ein bei Rotation des Mischeinsatzes 13 das zu bearbeitende Fluid durchziehendes Gatter.

Die freie Erstreckungslänge der stabförmigen Mischelemente 16' zwischen den Tragarmen 17 und den Halterungsarmen 19 entspricht etwa dem Radiusmaß eines Tragarmes 17, ausgehend von der Rührwerksachse x bis hin zum freien Ende des Tragarmes 17. Weiter ist die freie Länge der Mischelemente 16' so gewählt, dass sich die deren freien Enden aufnehmenden Halterungsarme 19 oberhalb des zu bearbeitenden Fluids erstrecken.

Bei entsprechend stabiler Auslegung der stabförmigen Mischelemente 16' können die Halterungsarme 19 auch entfallen.

Das radial äußerste, stabförmige Mischelement 16' ist mit einem radialen Abstand von 10mm bis 12mm zur Rührtopfwandung 18 positioniert. Die hiervon ausgehend nach radial innen sich anschließenden Mischelemente 16' sind mit einem gleichmäßigen Abstand von etwa 10mm zueinander angeordnet. Fußseitig der stabförmigen Mischelemente 16', entsprechend weiter oberseitig der Tragarme 17 zugeordnet sind radial verlaufende Mischelemente 16" in Art von Schaufelelementen 20 vorgesehen. Diese erstrecken sich ausgehend vom Steckhalterungsabschnitt 14 des Mischeinsatzes 13 in radialer Richtung nahezu über die gesamte Länge des jeweils zugeordneten Tragarmes 17, weiter mit einer vertikalen Höhe, die etwa einem Viertel der freien Länge eines stabförmigen Mischelementes 16' entspricht. Mit Bezug auf eine erste Drehrichtung a sind diese Schaufelelemente 20 vor den stabförmigen Mischelementen 16' positioniert, weiter an diese angebunden, wobei die Anbindung in Form eines Scharniers 21 mit jeweils sich radial und horizontal erstreckender Achse y gebildet ist. So ist weiter jedes Schaufelelement 20 bei insgesamt bevorzugt im Kunststoffspritzverfahren hergestelltem Mischeinsatz 13 beispielsweise über ein Filmscharnier im fußseitigen Bereich der Mischelemente 16' an diesen angebunden.

Zufolge der Scharnieranbindung sind die Schaufelelemente 20 aus einer ersten Stellung in eine zweite Stellung und zurück klappbeweglich, so weiter insbesondere aus einer Vertikalstellung in eine Horizontalstellung bzw. aus einer Horizontalstellung in eine Vertikalstellung.

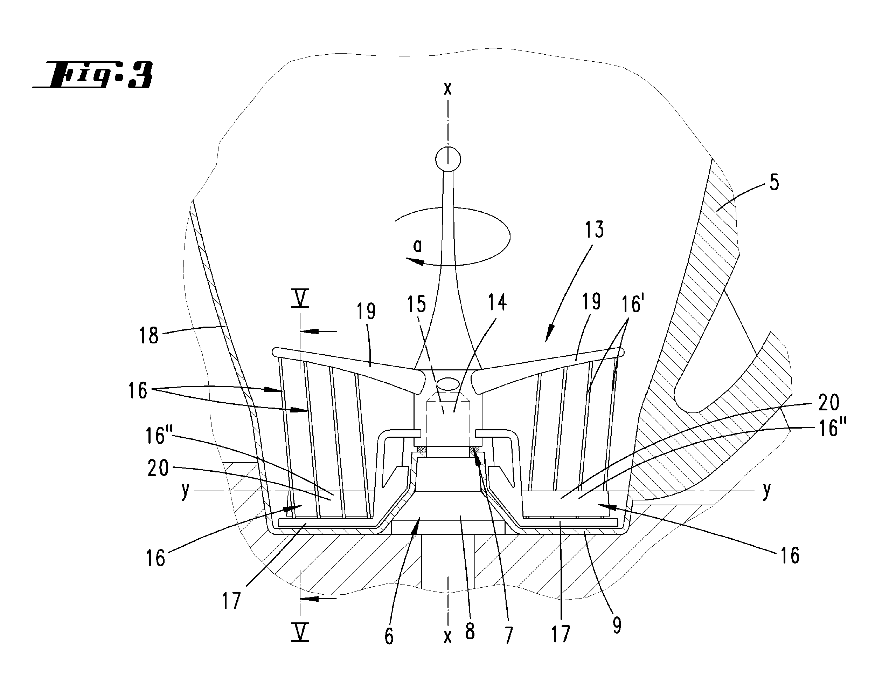

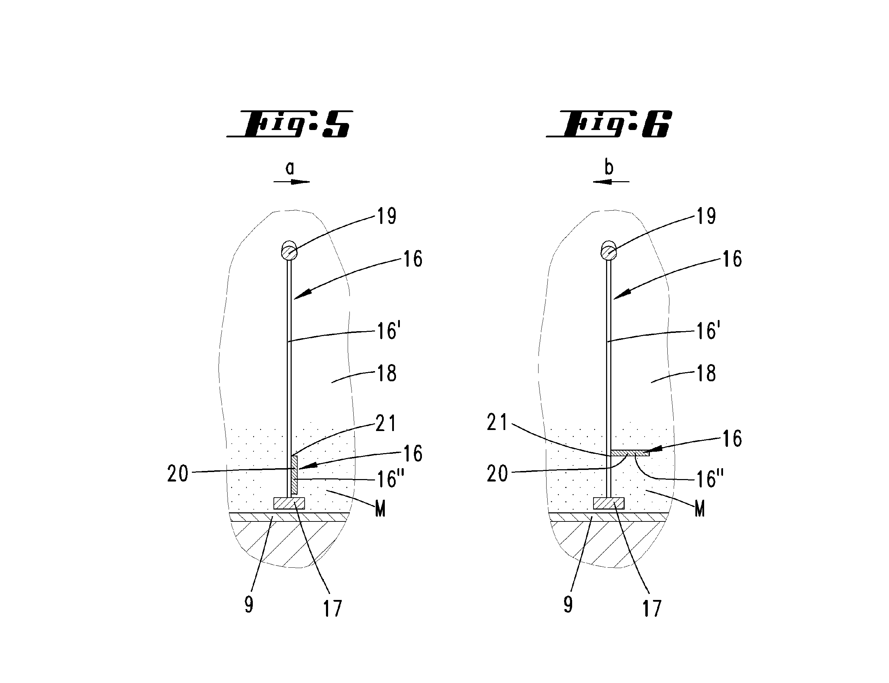

Durch die gegebene Klappbeweglichkeit der Schaufelelemente 20 werden je nach Klappstellung der Schaufelelemente 20 unterschiedliche Beaufschlagungsflächen für das zu bearbeitende Fluid angeboten. So stellt sich in der vertikal ausgerichteten Stellung eines jeden Schaufelelements 20 gemäß der Darstellung in den Figuren 3 und 5 eine große Beaufschlagungsfläche ein, die definiert ist durch das Radialerstreckungsmaß und die vertikale Höhe des Schaufelelements 20. In der horizontalen Klappstellung hingegen ist die Beaufschlagungsfläche gegenüber der Vertikalstellung wesentlich verkleinert, ist hier definiert durch die radiale Länge des Schaufelelementes 20 und deren Materialstärke, die in dem dargestellten Ausführungsbeispiel etwa der Materialstärke eines Tragarmes 17 entspricht.

Durch die mögliche Änderung der Beaufschlagungsflächen der Schaufelelemente 20 bzw. der durch diese geformten Mischelemente 16" ist der beschriebene Mischeinsatz 13 geeignet sowohl zum Schlagen von Sahne bzw. Eiweiß als auch zum Aufschäumen von Milch.

In der vertikal ausgerichteten Klappstellung der Schaufelelemente 20 dient der Mischeinsatz 13 insbesondere zum Schlagen von Sahne bzw. Eiweiß. Die stabförmigen Mischelemente 16' unterstützen hierbei den Schlagvorgang, wobei die Sahne in der Bahn gehalten wird, so dass diese nicht gegen die Rührtopfwandung 18 oder darüber hinaus in Richtung nach vertikal oben gegen den Deckel 12 spritzt.

In der aufgeklappten Stellung der Schaufelelemente 20, also in der horizontal ausgerichteten Stellung derselben dient der Mischeinsatz 13 bevorzugt zum Aufschäumen von Milch. Die Schaufelelemente 20 bieten hierbei eine relativ kleine Beaufschlagungsfläche, so dass die Blasen der durch die stabförmigen Mischelemente 16' aufgeschäumten Milch nicht zerstört werden. Weiter ist einem Verdrängen der Milch über eine zu große Beaufschlagungsfläche der Schaufelelemente 20 nach radial außen entgegengewirkt.

Die Umstellung der Schaufelelemente 20 bzw. der Mischelemente 16' kann durch den Benutzer erfolgen, dies weiter unter Nutzung von gegebenenfalls vorgesehenen Rastpositionen der Schaufelelemente 20. Bevorzugt und dargestellt ist eine drehrichtungsabhängige Umstellung der Schaufelelemente 20, dies zufolge einer Zusammenwirkung mit der in dem Rührtopf befindlichen Masse M.

Zum Schlagen von Sahne oder Eiweiß wird der Mischeinsatz 13 in Drehrichtung a gemäß Figur 3 betrieben, wobei die sich in dem Rührtopf 5 befindliche Masse M (Sahne oder Eiweiß) die Schaufelelemente 20 in die Vertikalausrichtung drängt und dort hält, wobei weiter die Schaufelelemente 20 sich rückwärtig gegen die bis zu den Tragarmen 17 durchgeführten stabförmigen Mischelemente 16' abstützen.

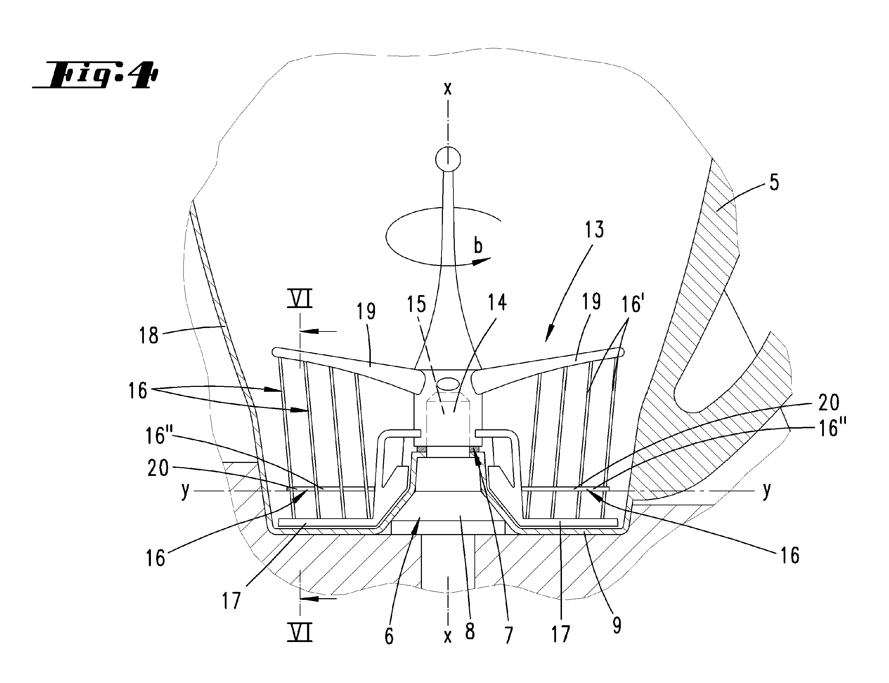

Zum Aufschäumen von Milch oder dergleichen wird der Mischeinsatz in entgegengesetzter Drehrichtung b betrieben (vgl. Figuren 4 und 6). Zufolge Einwirkung der aufzuschäumenden Masse M auf die der Schlagseite gegenüberliegende Seite der Schaufelelemente 20 werden diese selbsttätig um ihre Scharnierachsen y in die Horizontalausrichtung oder zumindest annähernd in eine horizontale Ausrichtung verschwenkt, womit einhergehend sich die Beaufschlagungsfläche wesentlich verkleinert.

Die aufzuschäumende Milch wird hierbei gleichermaßen verrührt, vermengt und aufgeschäumt, wobei weiter einem Anbrennen der Milch an dem beheizten Topfboden 9 entgegengewirkt ist.

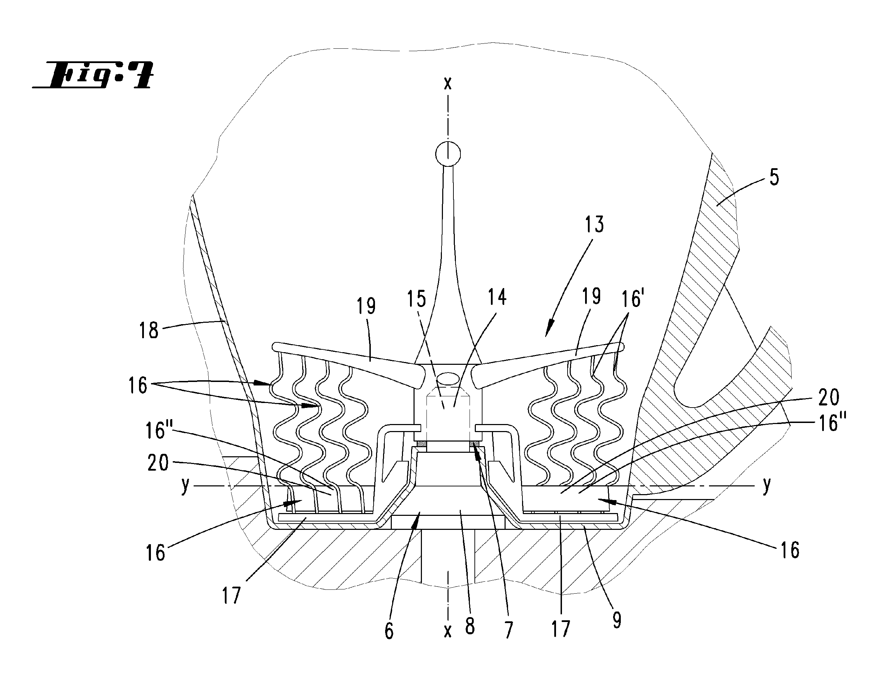

Alternativ zu den langgestreckt, geradlinig verlaufenden Mischelementen 16' können diese auch gemäß der Ausführungsform in Figur 7 in Erstreckungsrichtung betrachtet wellenförmig gestaltet sein. Weiter alternativ kann auch anstelle der einzelnen, stabförmigen Mischelemente 16' ein feines Drahtgitter oder dergleichen vorgesehen sein, dies mit einer bevorzugten Maschenweite von 1mm bis 4mm.

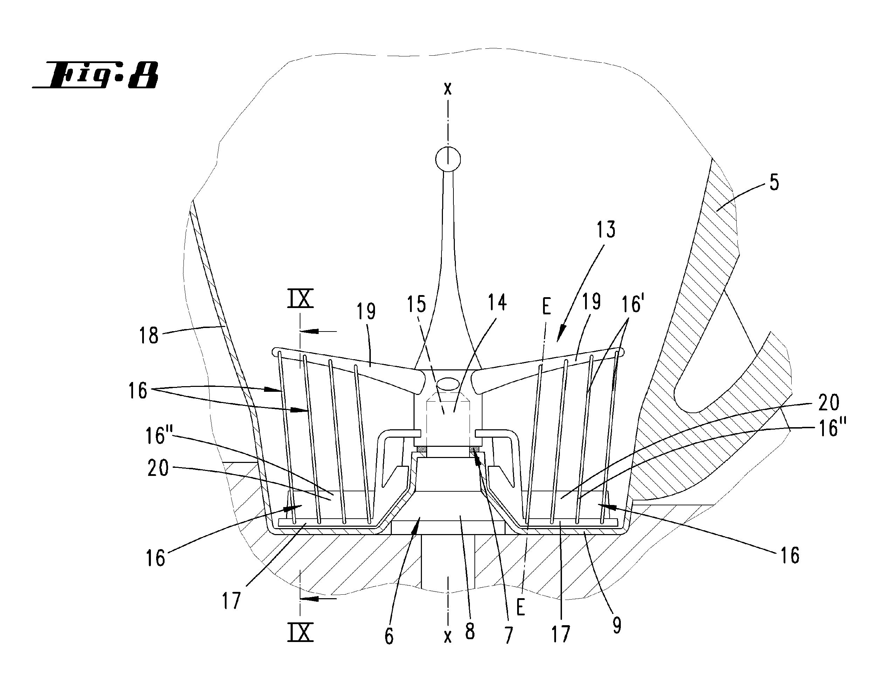

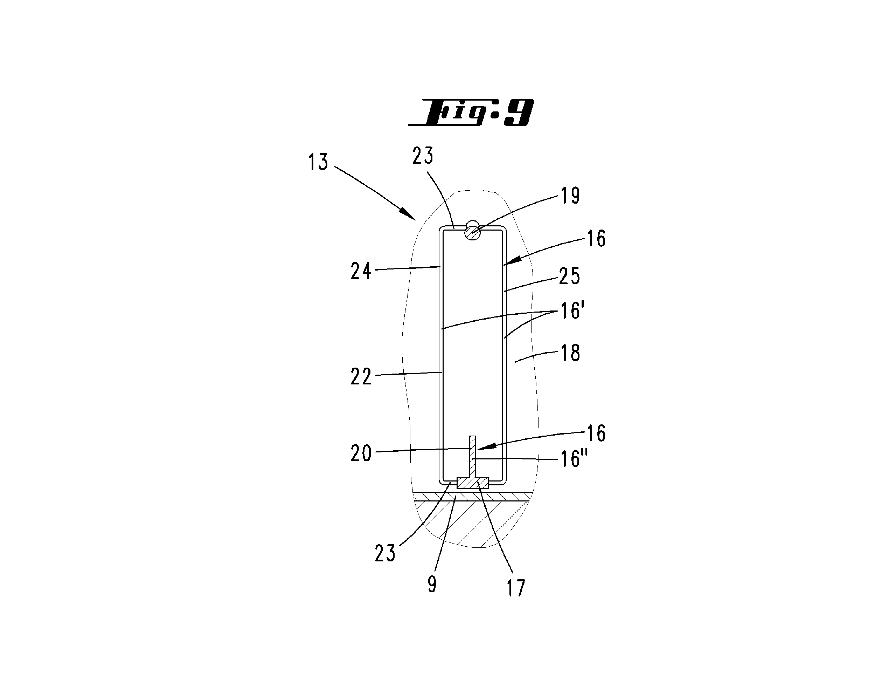

In einer weiteren Ausführungsform gemäß den Darstellungen in den Figuren 8 und 9 sind stabförmige Mischelemente 16' zusätzlich zu der in Radialrichtung betrachteten Nebeneinanderanordnung in Drehrichtung betrachtet auch hintereinander angeordnet, so weiter mit Bezug auf eine Seitenansicht gemäß Figur 8 deckungsgleich hintereinander. Dies ist in dem dargestellten Ausführungsbeispiel erreicht durch eine bügelartige Ausbildung der Mischelemente 16', deren Bügelebene E im Querschnitt in einem stumpfen Winkel zu der vertikal ausgerichteten Schaufelelementebene steht, weiter in dem dargestellten Ausführungsbeispiel etwa in einem Winkel von 80°, wobei die Bügelebene E ausgehend von den die Bügel tragenden Tragarmen 17 nach außen in Richtung auf die Rührtopfwandung 18 geneigt ist.

Die Mischelemente-Bügel 22 sind beispielsweise aus einem gebogenen, kunststoffummantelten Draht oder alternativ aus einem drahtförmigen Kunststoffspritzteil gebildet, dies mit einem langgestreckt rechteckigen Grundriss (vgl. Figur 9). Die die annähernd vertikal ausgerichteten, stabförmigen Mischelemente 16' verbindenden Querabschnitte 23 weisen hierbei eine Länge auf, die etwa dem 0,25-Fachen der Erstreckungslänge eines Mischelementes 16' entspricht. Die Festlegung der Mischelemente-Bügel 22 ist erreicht im Bereich der Querabschnitte 23, die den jeweiligen Tragarm 17 bzw. den jeweiligen Halterungsarm 19 durchsetzen oder an diesen angeformt sind.

In dem Ausführungsbeispiel gemäß den Figuren 8 und 9 ist das fußseitig vorgesehene, radial verlaufende Mischelemente 16" als statisches Schaufelelement 20 gebildet, welches sich zwischen den in Drehrichtung hintereinander angeordneten Mischelementen 16' erstreckt und unmittelbar an den Tragarmen 17 und/oder an dem Steckhalterungsabschnitt 14 befestigt ist.

Weiter alternativ zu der in Drehrichtung betrachteten Hintereinanderanordnung von stabförmigen, gegebenenfalls wellenförmigen Mischelementen 16' ist auch eine versetzte Anordnung derselben auf Lücke möglich derart, dass mit Bezug auf eine Seitenansicht gemäß Figur 8 zwischen zwei Mischelementen 16' in einer in Drehrichtung betrachteten vorderen Mischelementeebene ein Mischelement 16' in der in Drehrichtung hinteren Mischelementeebene angeordnet ist.

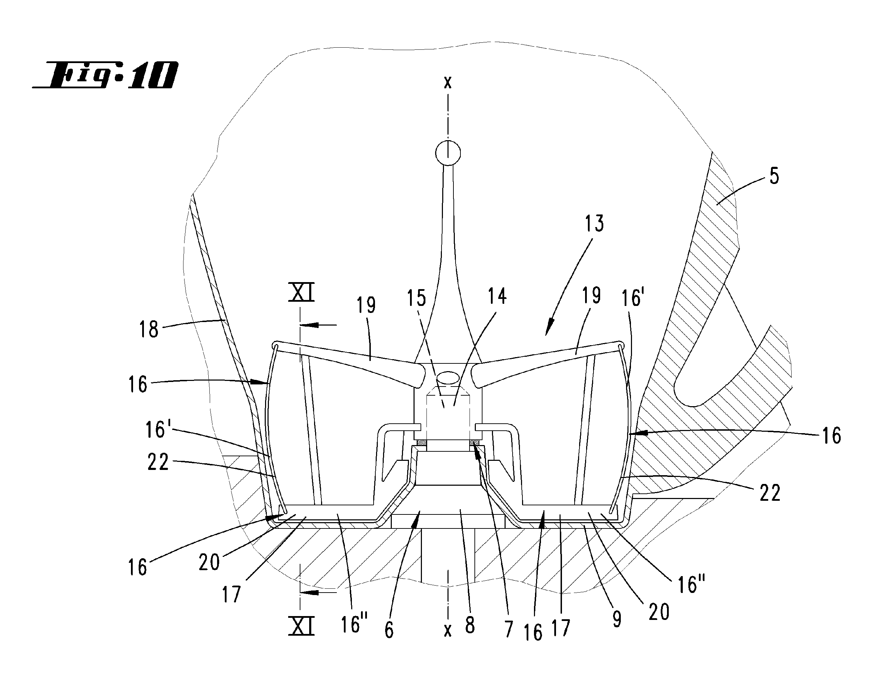

Die Figuren 10 bis 15 zeigen drei weitere Ausführungsbeispiele eines Mischeinsatzes 13, bei welchem jeweils zwischen den freien Enden der Tragarme 17 und der Halterungsarme 19 ein stabförmiges Mischelement 16' gespannt ist, welches weiter mit Bezug auf die Rührwerksachse x konvexartig nach radial außen in Richtung auf die Rührtopfwandung 18 auslädt, dies unter Beibehaltung eines radialen Abstandes zur Rührtopfwandung 18. Diese drahtförmigen Mischelemente 16' schlagen insbesondere die durch die Zirkulation im Rührtopf 5 an die Rührtopfwandung 18 gedrängte, geschlagene Sahne oder Eiweiß wieder in den schlagenden Kreislauf zurück. Auch wird die durch die zentrale Anordnung an die Rührtopfwandung 18 gedrängte, aufzuschäumende Milch weiter durch die Mischelemente 16' aufgeschäumt.

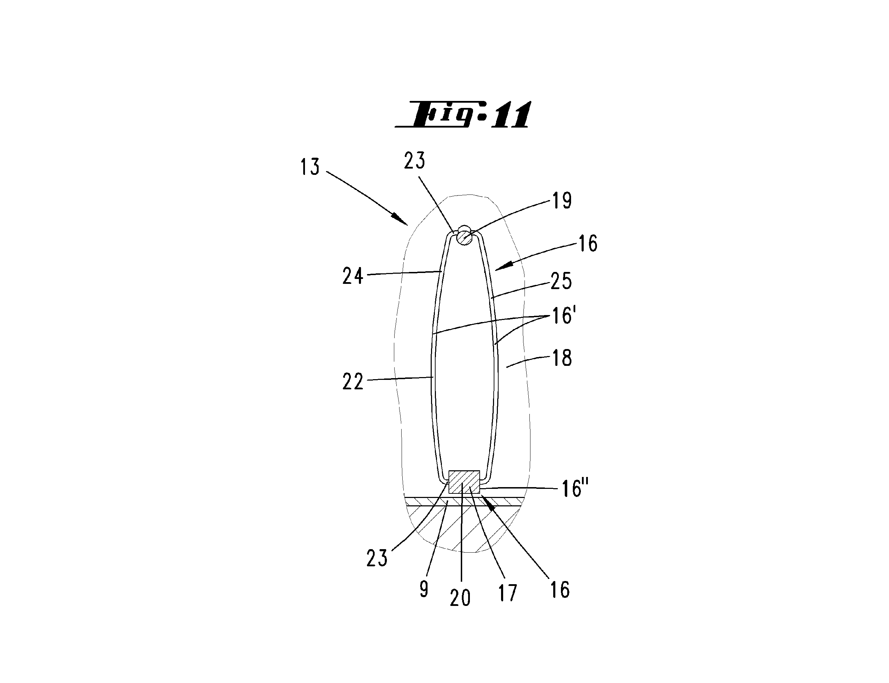

Das drahtförmige Mischelement 16' ist gemäß der Darstellung in Figur 11 als geschlossener Bügel gestaltet, formt entsprechend einen Mischelemente-Bügel 22 aus, wobei die hierdurch jeweils gebildeten zwei Mischelemente 16' eines Bügels 22 in einem gemeinsamen Drehkreis angeordnet sind.

Zwischen den Mischelementen 16' eines Bügels 22 erstreckt sich auch in dieser Ausführungsform das an dem Halterungsarm 19 festgelegte Schaufelelement 20 bzw. Mischelement 16".

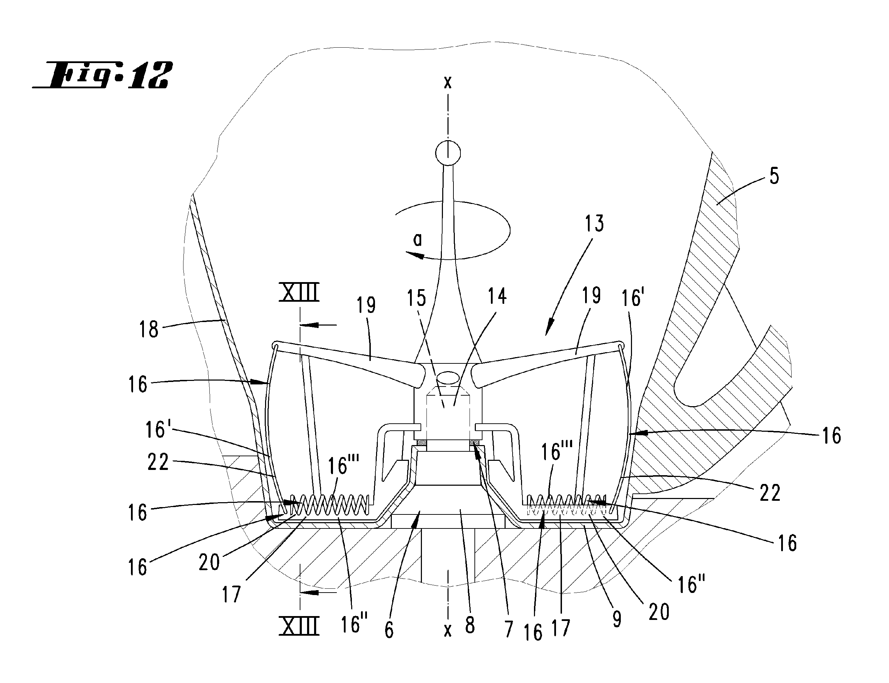

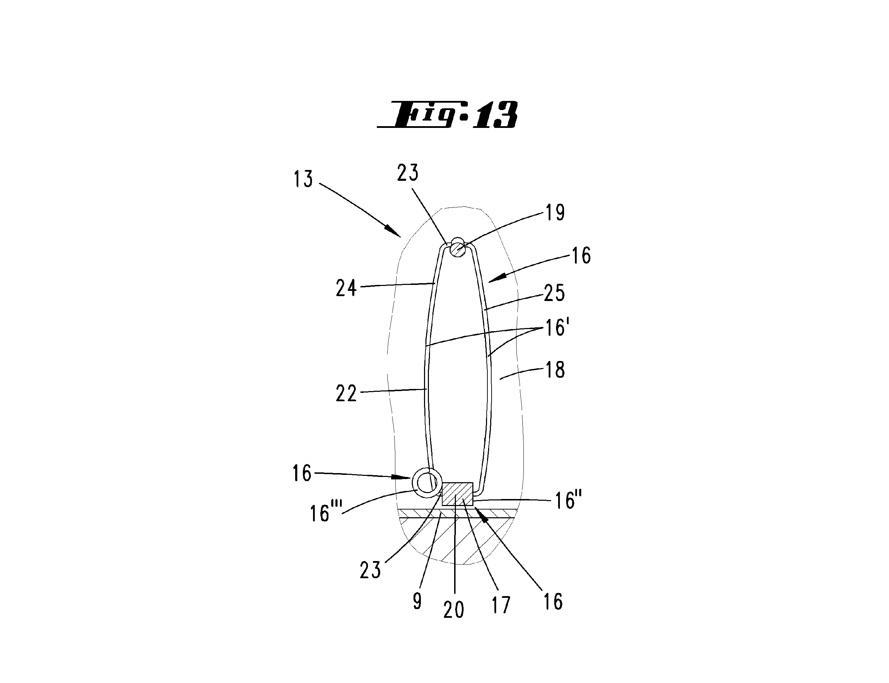

In den Figuren 12 und 13 ist eine Weiterbildung der Ausführungsform gemäß den Figuren 10 und 11 dargestellt. Deren Mischelemente 16' sind gleichgestaltet der zuvor beschriebenen Ausführung. Zusätzlich sind den fest angeordneten Schaufelelementen 20 in einer Drehrichtung vorgelagert, horizontal und radial ausgerichtete, federgangartige Mischelemente 16'" zugeordnet. Diese sind jeweils in Art einer Zylinderfeder ausgebildet und an der, der Beaufschlagungsfläche des jeweiligen Schaufelelementes 20 gegenüberliegenden Fläche an dem Schaufelelement 20 befestigt derart, dass diese zumindest in teilweiser Überdeckung zu dem jeweiligen Schaufelelement 20 liegen.

Über die federgangartigen Mischelemente 16'" ist eine günstige Durchmischung von Milch mit Luft erreichbar, so dass diese aufgeschäumt wird.

Der Mischeinsatz 13 der Ausführungsform gemäß den Figuren 12 und 13 wirkt drehrichtungsabhängig. So wird bei einer vorgegebenen Drehrichtung a über die in der Drehrichtung zunächst das Fluid beaufschlagenden Schaufelelemente 20 Sahne oder Eiweiß geschlagen. Die in Drehrichtung nachgeordneten Mischelemente 16'" kommen hierbei weniger zur Wirkung. Zum Aufschäumen von Milch wird die entgegengesetzte Drehrichtung eingeschlagen, so dass hierbei zunächst die federgangartigen Mischelemente 16'" bedingt durch die Feinstrukturierung Luft unter die aufzuschäumende Milch mischt.

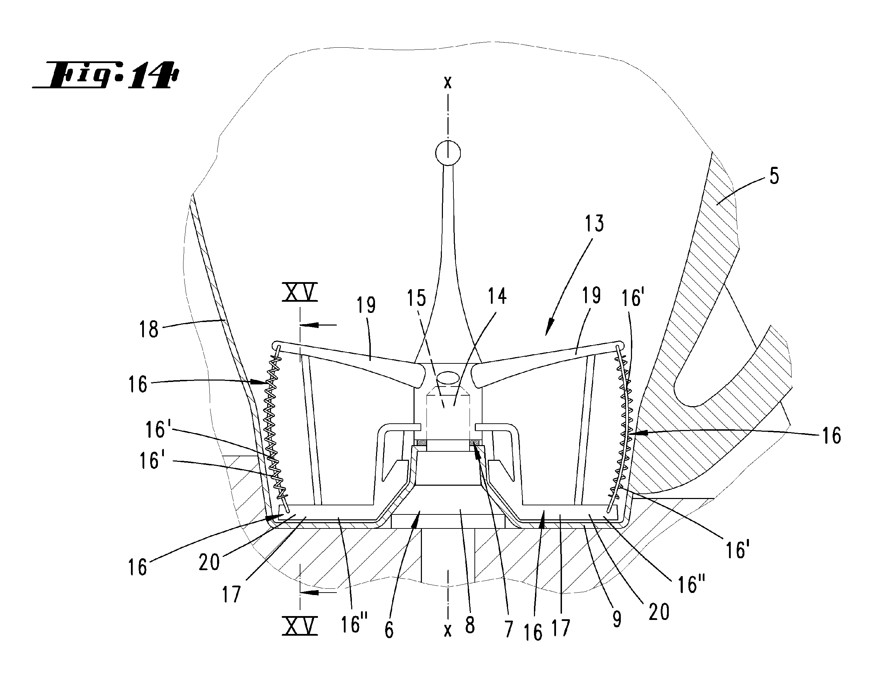

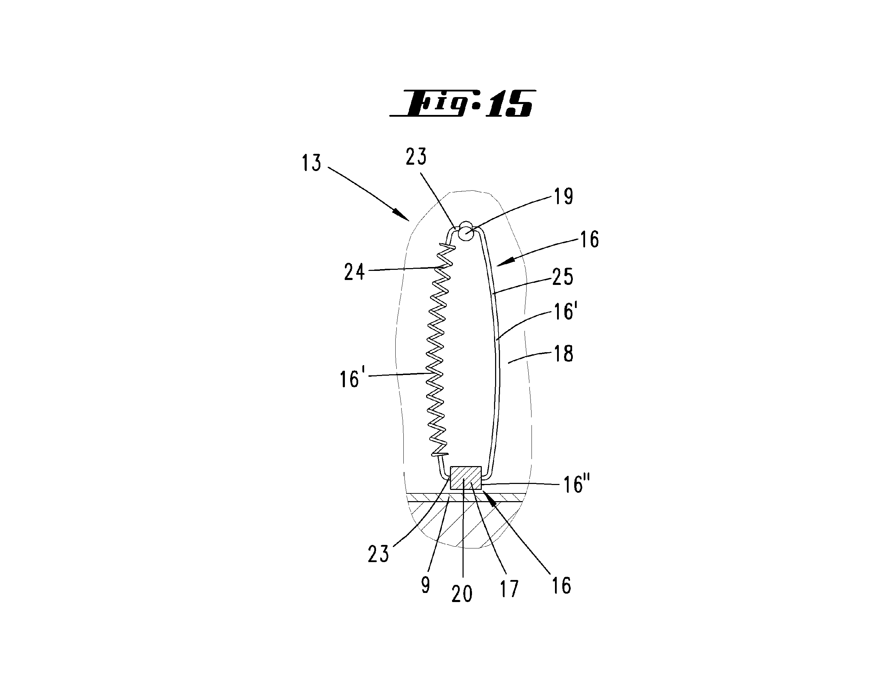

Auch die Ausführungsformen gemäß den Figuren 14 und 15 basiert auf der beschriebenen Ausführungsform gemäß den Figuren 10 und 11, wobei hier die in Drehrichtung vorderen Bügelabschnitte 24 unterschiedlich gestaltet zu den in Drehrichtung hinteren Bügelabschnitten 25. So bilden die vorderen Bügelabschnitte 24 stabförmige Mischelemente 16", während die hinteren Bügelabschnitte 25 wellenförmige Mischelemente 16" in Art schraubengangförmiger Drähte ausformen.

Auch diese Ausführungsform des Mischeinsatzes 13 wirkt drehrichtungsabhängig, wobei zum Schlagen von Sahne oder Eiweiß in Drehrichtung zunächst das stabförmige, bzw. drahtförmige Mischelement 16" auf das Fluid einwirkt, welchem das wellenförmige Mischelement 16" folgt. Zum Aufschäumen von Milch wird die Drehrichtung geändert, so dass über die wellenförmigen Mischelemente 16" Luft in die aufzuschäumende Milch eingemischt wird.

Die Ausführungsform gemäß den Figuren 14 und 15 ist weiter beispielsweise kombinierbar mit der Ausführungsform gemäß den Figuren 12 und 13.

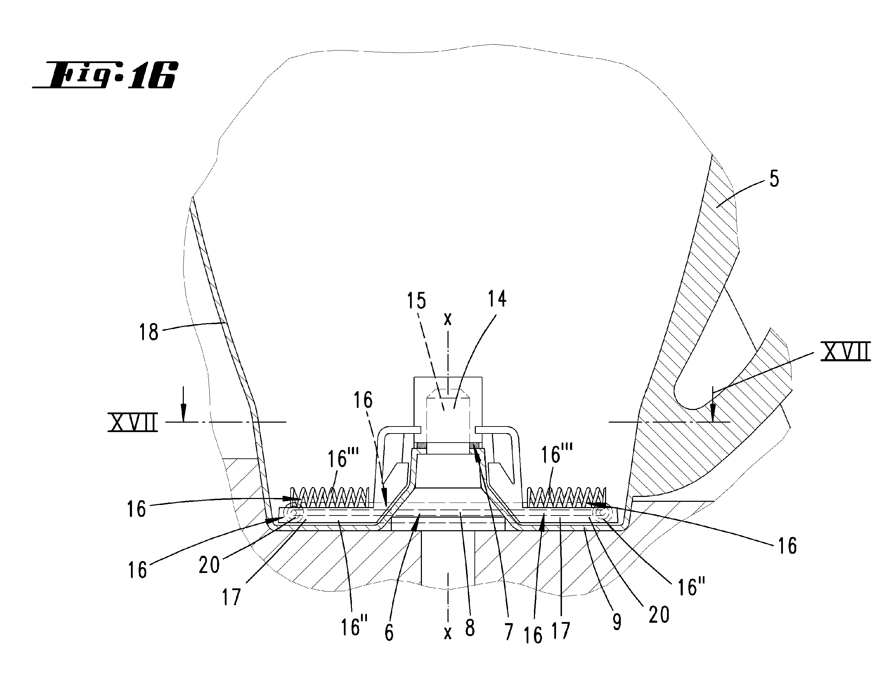

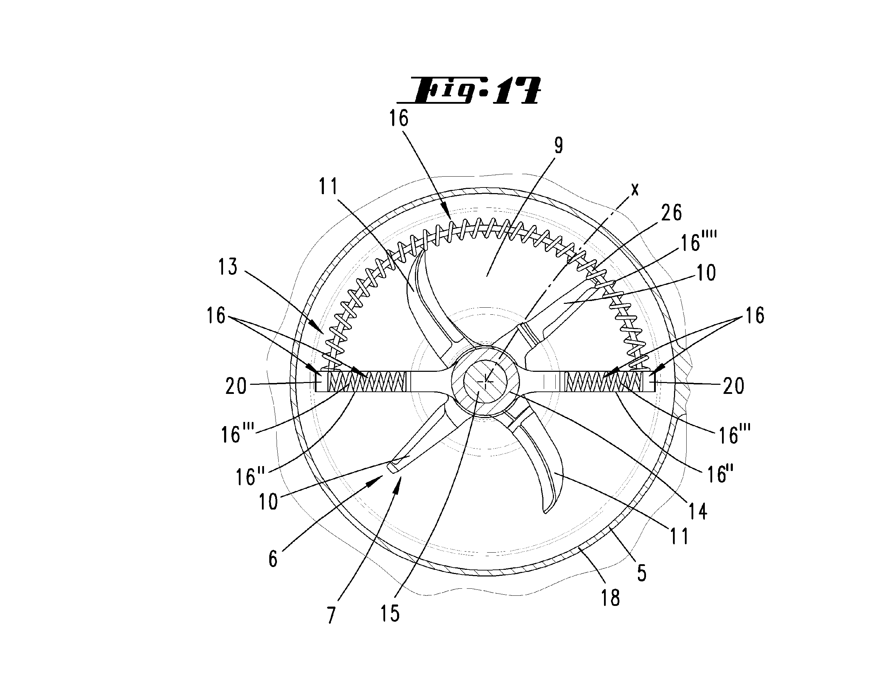

Weiter zeigen die Figuren 16 und 17 eine Ausführungsform, bei welcher der Steckhalterungsabschnitt 14 lediglich dem Topfboden 9 zugewandte Tragarme 17 aufweist. Diese sind oberseitig, das heißt dem Topfboden 9 abgewandt mit in horizontaler Ebene und radial sich erstreckenden, schraubengangförmigen Mischelementen 16'" versehen. Diese bilden zusammen mit den gegenüber den zuvor beschriebenen Ausführungsbeispielen in Vertikalrichtung stärker ausgebildeten Tragarmen 17 Schaufelelemente 20 zum Schlagen von Sahne oder Eiweiß, wobei weiter diese Ausbildung auch drehrichtungsunabhängig geeignet ist zum Aufschäumen von Milch.

Den Schaufelelementen 20 ist weiter ein sich horizontal erstreckendes Mischelement 16"" zugeordnet. Dieses erstreckt sich mit geringem vertikalen Abstand unmittelbar oberhalb des Topfbodens 9 in einer Kreisabschnittform. So ist in dem dargestellten Ausführungsbeispiel das Mischelement 16"" halbkreisförmig gestaltet, mit einem sich auf die Rührwerksachse x beziehenden Radius, wobei die Enden des so in der Horizontalebene gebogenen Mischelements 16"" im Bereich der freien Enden der Schaufelelemente 20 bzw. der Tragarme 17 gehaltert sind.

Das Mischelement 16"" ist in dem dargestellten Ausführungsbeispiel in Längserstreckung desselben betrachtet schraubengangförmig gebildet, dies unter Durchsetzung eines dem Verlauf des Mischelementes 16"" folgenden Stabilisierungsdrahtes 26.

Das Mischelement 16"" ist zumindest in teilweiser horizontaler Überdeckung zu den Schaufelelementen 20 bzw. Tragarmen 17 angeordnet, wobei in dem dargestellten Ausführungsbeispiel der Überdeckungsbereich etwa dem 0,6- bis 0,7-Fachen des Mischelementedurchmessers entspricht.

Das federartige Mischelement 16"" rotiert mit geringem vertikalen Abstand zum Topfboden 9, weiter mit geringem radialen Abstand zur Rührtopfwandung 18, an welchem Boden oder welcher Wandung sich Milch oder auch Sahne bzw. Eiweiß durch die Rotationskräfte ansammeln kann. Die geschlagene Sahne bzw. Eiweiß sowie die aufzuschäumende Milch breitet sich hierbei nach vertikal oben aus, womit durch den Mischeinsatz 13 lediglich die noch nicht bearbeitete Flüssigkeit geschlagen bzw. aufgeschäumt wird.

In alternativer Ausgestaltung kann das Mischelement 16"" auch als Vollkreis vorliegen, weiter alternativ auch in Form zweier in Drehrichtung zueinander beabstandeter Viertelkreise.

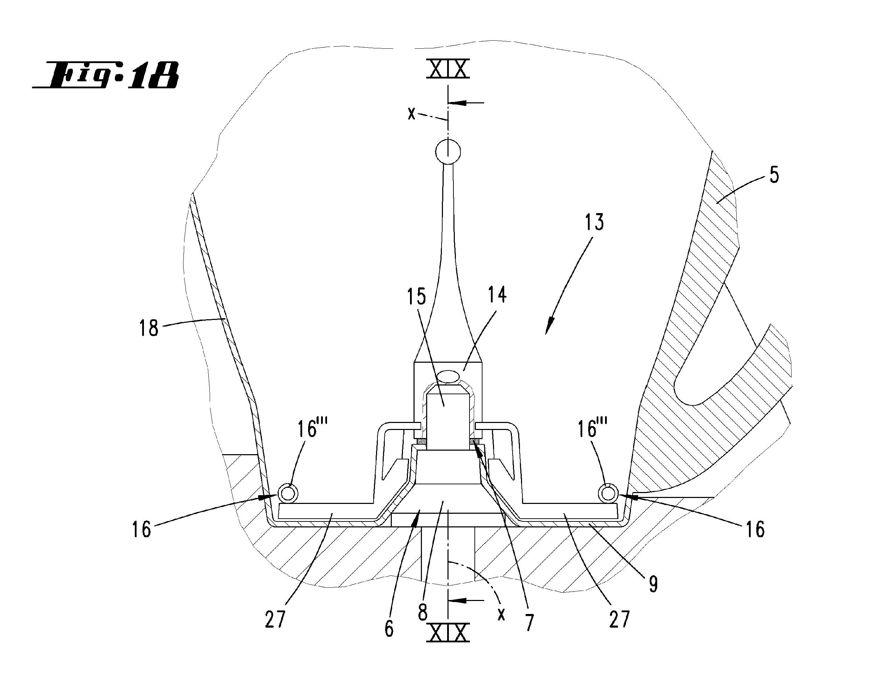

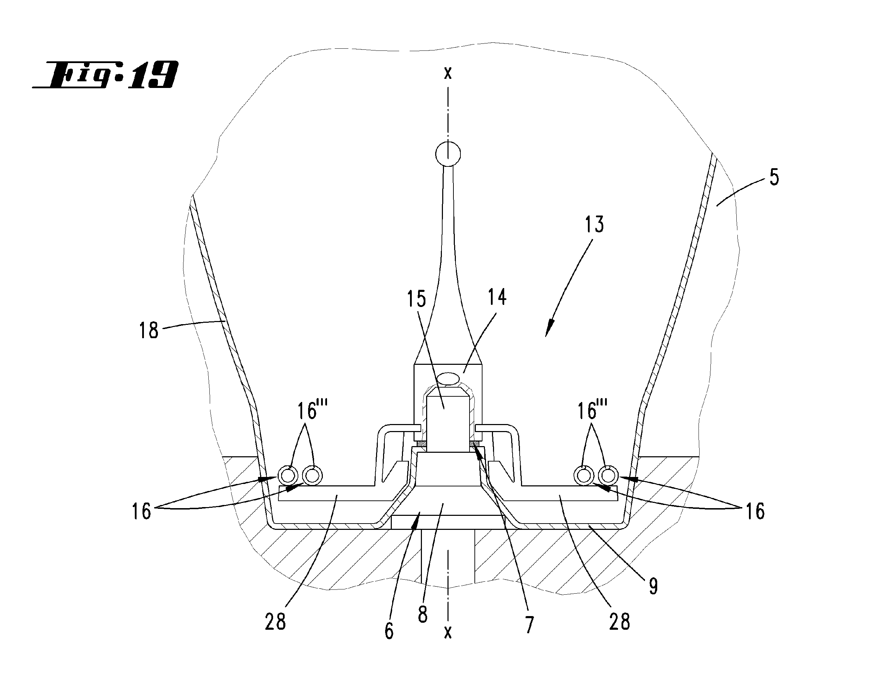

Die Figuren 18 bis 20 zeigen einen Mischeinsatz 13 in einer weiteren Ausführungsform. Dieser ist insbesondere geeignet zum Aufschäumen von Milch, weiter insbesondere zum Aufschäumen von Milch in Mengen von 50ml bis 400ml.

An dem zentralen Steckhalterungsabschnitt 14 sind in dem dargestellten Ausführungsbeispiel vier kreuzweise sich zueinander erstreckende Mischarme 27, 28 vorgesehen. Diese erstrecken sich in Radialrichtung bis an die Rührtopfwandung 18 unter Belassung eines geringen radialen Abstandes.

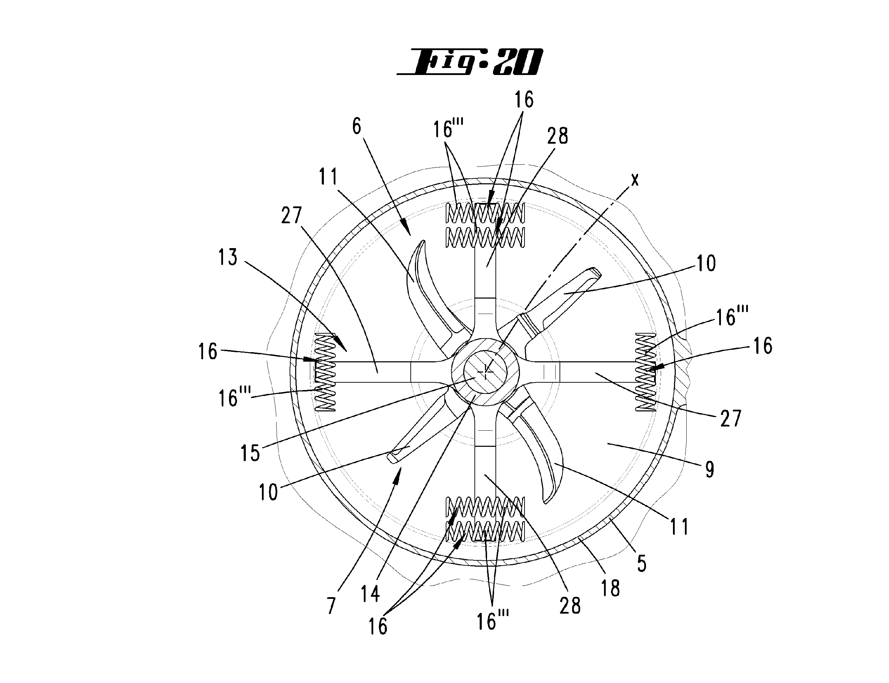

Die beiden Mischarme 27 verlaufen radial gegenüberliegend wie auch die Mischarme 28, die in einem Grundriss gemäß Figur 20 betrachtet rechtwinklig zu den Mischarmen 27 angeordnet sind. Hierbei erstrecken sich die Mischarme 27 gleich den Tragarmen 17 der zuvor beschriebenen Ausführungsformen mit geringem vertikalen Abstand ebenenparallel zum Topfboden 9, während die Mischarme 28 in einer vertikal hierzu versetzten Horizontalebene angeordnet sind. Der Vertikalversatz der Mischarme 27, 28 zueinander beträgt in dem dargestellten Ausführungsbeispiel mehrere Millimeter, beispielsweise 10mm.

Jeder Mischarm 27, 28 ist mit einem quer zu seiner Erstreckung und somit nahezu in Umlaufrichtung ausgerichteten Mischelement 16'" versehen. Dieses ist in einer Horizontalebene ausgerichtet und in dem dargestellten Ausführungsbeispiel schraubengangartig in Art einer Zylinderfeder gestaltet. Die Mischelemente 16'" sind im Bereich der freien Enden der Mischarme 27, 28 oberseitig an diesen festgelegt, wobei weiter die in Vertikalrichtung betrachteten unteren Mischarme 27 jeweils ein Mischelement 16'" aufweisen, während die vertikal oberen Mischarme 28 jeweils zwei in radialer Nebeneinanderanordnung vorgesehene Mischelemente 16'" tragen.

Der Abstand zwischen den Windungen der Mischelemente 16'" definiert im Betrieb in etwa die Blasengröße im aufzuschäumenden Medium. Zur Realisierung eines stabilen Milchschaumes ist in bevorzugter Ausgestaltung ein Windungsabstand von 1mm bis 4mm vorgesehen.

Der vorbeschriebene Mischeinsatz 13 ist besonders geeignet zum Aufschäumen von Milch, findet darüber hinaus jedoch auch, insbesondere durch die, in Drehrichtung weisende Beaufschlagungsflächen ausformenden Mischarme 27, 28 Anwendung zum Schlagen von Sahne und/oder Eiweiß.

Weiter alternativ können die Mischelemente 16'" anstelle der streng horizontalen Ausrichtung auch schräg zu einer Horizontalebene angeordnet sein, dies weiter beispielsweise in einem Winkel von bis zu 30° zur Horizontal- oder Vertikalebene.

Die federgang- bzw. schraubengangförmigen Mischelemente 16'" der vorbeschriebenen Ausführungsbeispiele können aus Metall oder Kunststoff bestehen, weiter zylindrisch, konisch oder mit sich veränderlichem Durchmesser ausgebildet sein. Alternativ zu einer schraubengangartigen Feder kann auch ein Gitter zu einer zylindrischen Form gefügt sein, wobei bei Rotation des Mischeinsatzes 13 die Milch durch das Gitter gedrückt und aufgeschäumt wird.

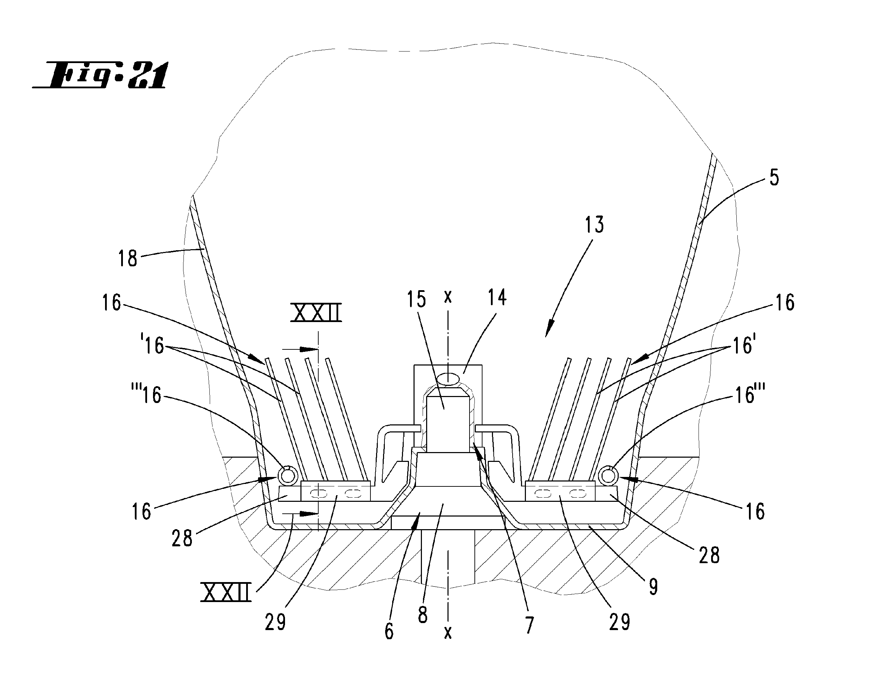

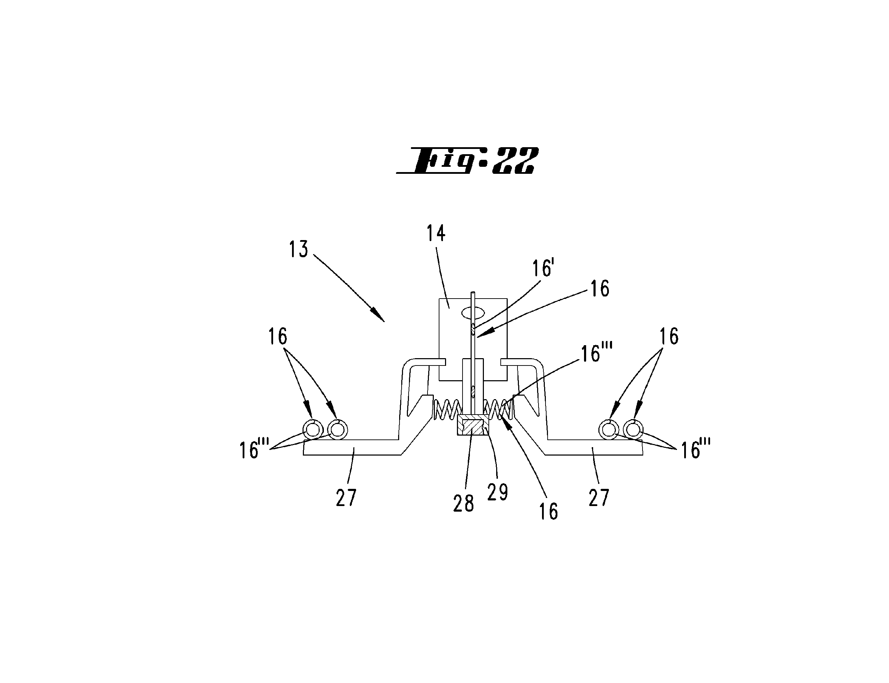

Die Figuren 21 und 22 zeigen eine Weiterbildung des zuvor beschriebenen Ausführungsbeispieles, wobei hier den unteren Mischarmen jeweils zwei und den oberen Mischarmen 28 jeweils ein Mischelement 16'" in Schraubengangform zugeordnet sind. Weiter sind nach radial innen zu den Mischelementen 16'" an den vertikal oberen Mischarmen 28 stabförmige Mischelemente 16' festgelegt, welche gleich dem ersten Ausführungsbeispiel nach oben divergierend angeordnet sind, dies unter jeweils paralleler Ausrichtung von Mischelementen 16' eines jeden Mischarmes 28. Diese Mischelemente 16' laufen ausgehend von den Mischarmen 28 frei aus, sind entsprechend stabil ausgebildet.

Die Mischelemente 16' wurzeln in einem an den Querschnitt des Mischarmes 28 angepassten, im wesentlichen U-förmigen Fuß 29, zur Steckzuordnung eines so zusammengefassten Mischelemente-Abschnittes an den jeweiligen Mischarm 28.

So ist durch einfache Steckzuordnung der Mischelemente-Abschnitte durch Ansetzen des Fußes 29 an den jeweiligen Mischarm 28 der Mischeinsatz 13 zum Schlagen von Sahne bzw. Eiweiß geeignet. Zum Aufschäumen von Milch hingegen werden die Mischelemente 16' von den Mischarmen 28 entfernt.

In alternativer Ausgestaltung können die Mischelemente-Abschnitte auch an den Mischarmen 28 geklemmt oder angeschraubt werden.

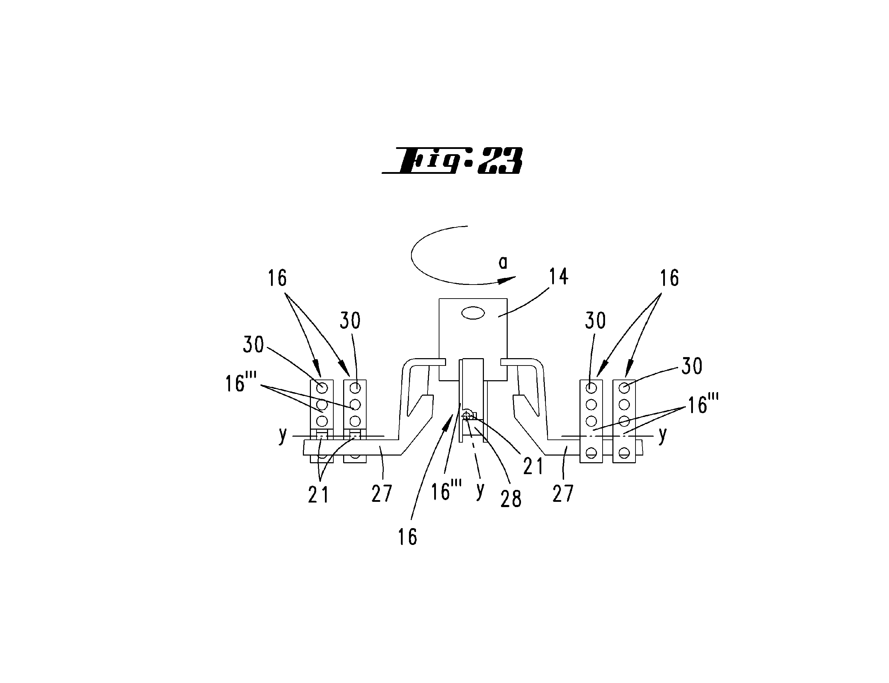

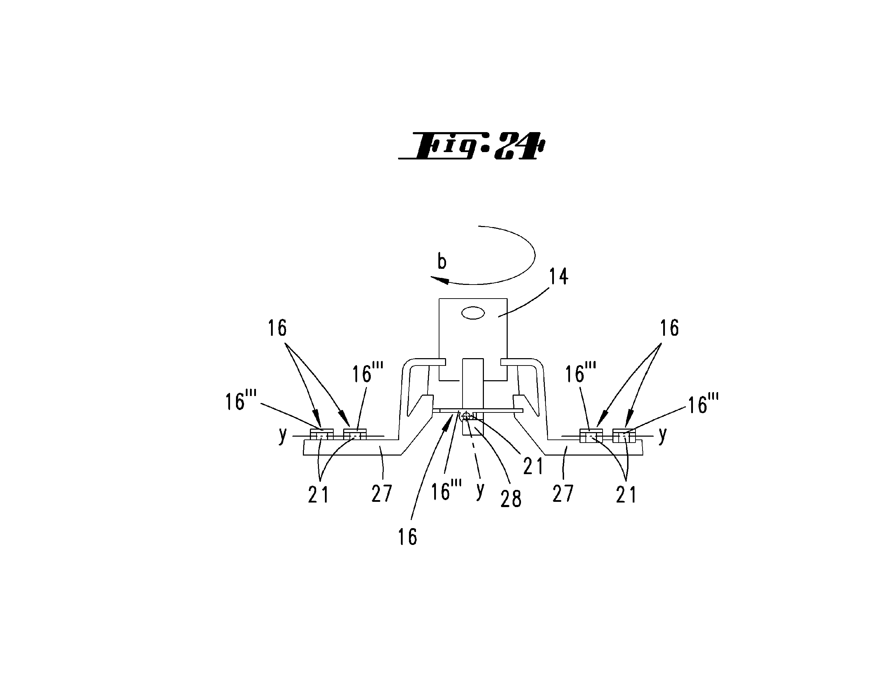

Eine weitere Ausführungsform zeigen die Figuren 23 und 24, wobei auch hier kreuzförmig angeordnete Mischarme 27, 28 vorgesehen sind. Diese paarweise in Gegenüberlage angeordneten Mischarme 27, 28 sind in vertikal unterschiedlichen Horizontalebenen angeordnet und tragen entsprechend dem zuvor beschriebenen Ausführungsbeispiel quer zur Erstreckung der Mischarme 27, 28 ausgerichtete Mischelemente 16"'. Diese sind plattenförmig langgestreckt gestaltet und mit Bohrungen 30 versehen.

Die Mischelemente 16'" sind weiter über Scharniere 21 an den Mischarmen 27, 28 angebunden, mit jeweils einer Scharnierachse y, die sich in einer Horizontalebene und in Radialrichtung mit Bezug zur Rührwerksachse x erstreckt. Zufolge dieser Anordnung sind die Mischelemente 16'" klappbeweglich an den Mischarmen 27, 28 angeordnet, zur Änderung der wirksamen Beaufschlagungsfläche eines jeden Mischelementes 16"'. Die Änderung der Beaufschlagungsfläche stellt sich auch hier entsprechend den Ausführungen des ersten Ausführungsbeispieles zufolge einer Zusammenwirkung mit der in den Rührtopf 5 befindlichen Masse M selbsttätig drehrichtungsabhängig ein. So stellen sich die Mischelemente 16'" bei einer Drehrichtung a gemäß der Darstellung in Figur 23 in eine vertikal ausgerichtete Stellung unter Abstützung eines Elemente-Abschnittes an der in Drehrichtung hinteren Seitenfläche des zugeordneten Mischarmes 28, in welcher Ausrichtung der Mischelemente 16'" bzw. in welcher Drehrichtung a des Mischeinsatzes letzterer einen größeren Widerstand in der Strömung bildet und günstig zum Schlagen von Sahne oder Eiweiß wirkt.

In entgegengesetzter Drehrichtung b gemäß der Darstellung in Figur 24 klappen die Mischelemente 16'" in eine Horizontalstellung, in welcher diese auf der nach vertikal oben weisenden Fläche der zugeordneten Mischarme 28 aufliegen und sich somit längs zur Strömung stellen. Entsprechend bieten die Mischelemente 16'" einen geringen Widerstand, der zum Milch aufschäumen genutzt werden kann.

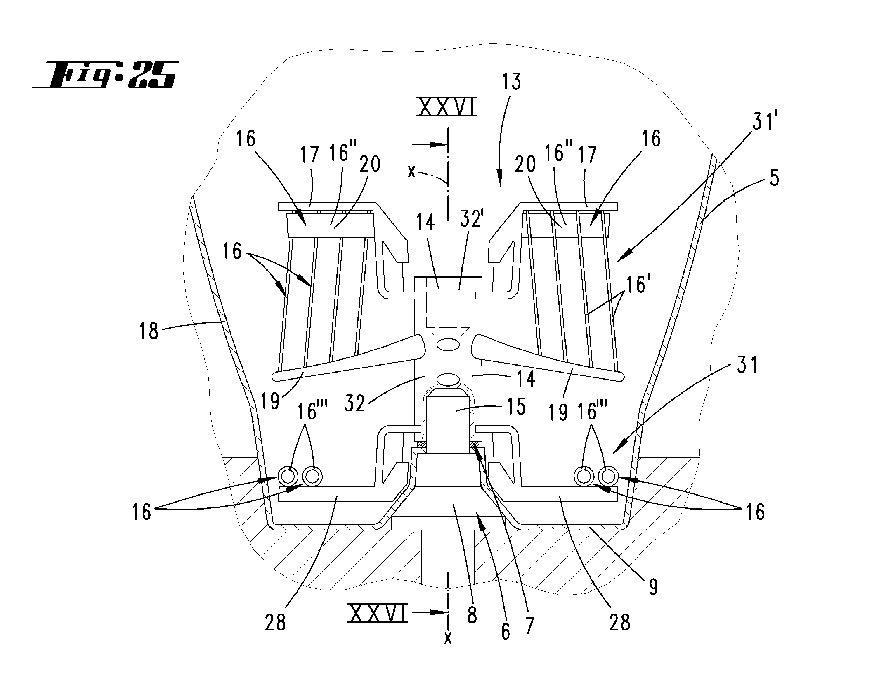

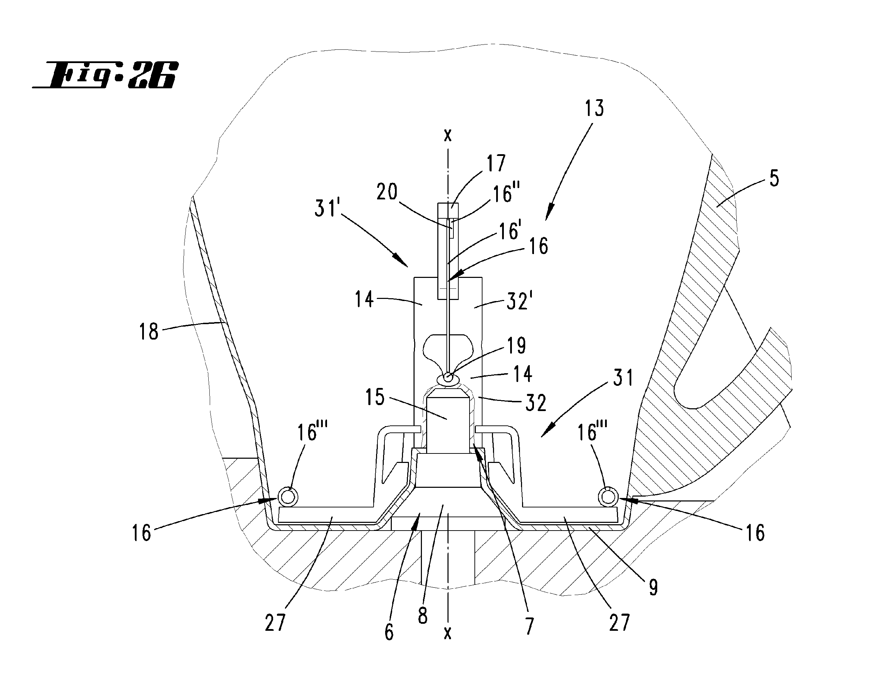

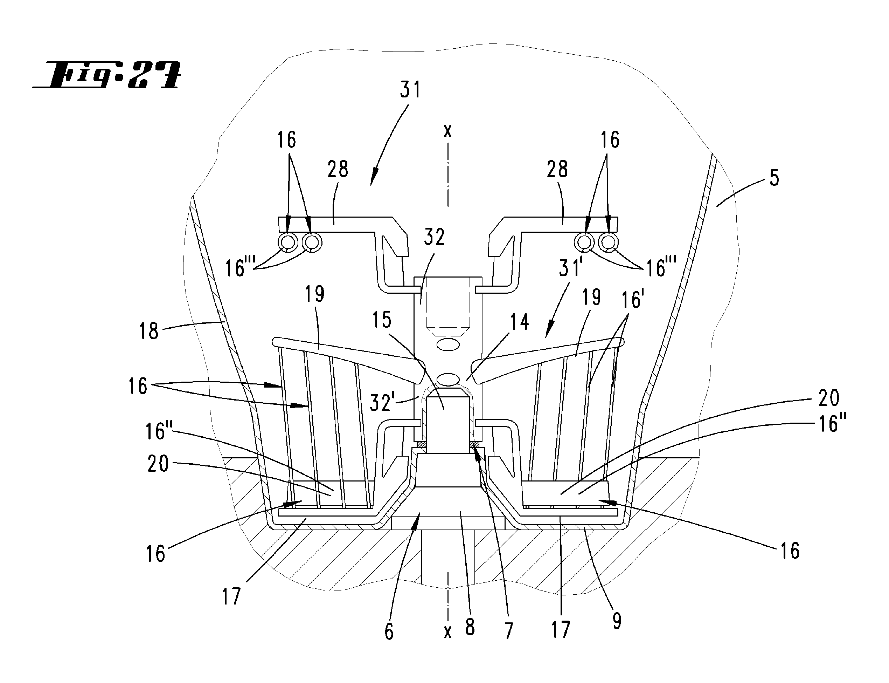

Eine weitere günstige Ausgestaltung eines Mischeinsatzes 13 sowohl zum Schlagen von Sahne bzw. Eiweiß als auch zum Aufschäumen von Milch zeigen die Figuren 25 bis 27. Hierbei handelt es sich um eine Kombination der Mischeinsätze 13 der in den Figuren 8 und 9 sowie in den Figuren 18 bis 20 dargestellten Ausführungsformen, die konzentrisch zur Rührwerksachse x in Übereinanderanordnung vorgesehen sind, wobei ein Mischeinsatzteil gegenüber dem anderen Mischeinsatzteil in Überkopfstellung angeordnet ist.

Jedes Mischeinsatzteil 31, 31' weist einen Aufsteckabschnitt 32, 32' auf, jeweils ausformend einen Steckhalterungsabschnitt 14. Diese sind in einer Projektion auf den Topfboden 9 betrachtet deckungsgleich zueinander ausgerichtet und mit Bezug auf eine horizontale Spiegelebene symmetrisch angeordnet.

Durch einfaches Umdrehen des so gestalteten Mischeinsatzes 13 und entsprechendem Umstecken des Aufsteckbereiches 32 bzw. 32' ist das jeweils für die Fluidbearbeitung günstige Mischeinsatzteil 31 bzw. 31' dem Rührtopfboden 9 zuordbar, so zum Aufschäumen von Milch das Mischeinsatzteil 31 und zum Schlagen von Sahne oder Eiweiß das Mischeinsatzteil 31'.

Hierbei sind die Halterungsarme 19 des Mischeinsatzteiles 31' so vertikal zu den Mischelementen 16'" des gegenüberliegenden Mischeinsatzteiles 31 beabstandet, dass diese beim Aufschäumen von Milch in der in Figur 25 dargestellten Zuordnungsstellung des Mischeinsatzes 13 mit Abstand oberhalb des Milchspiegels in dem Rührtopf 5 rotieren und somit die Blasenbildung im Milchschaum nicht beeinträchtigen.

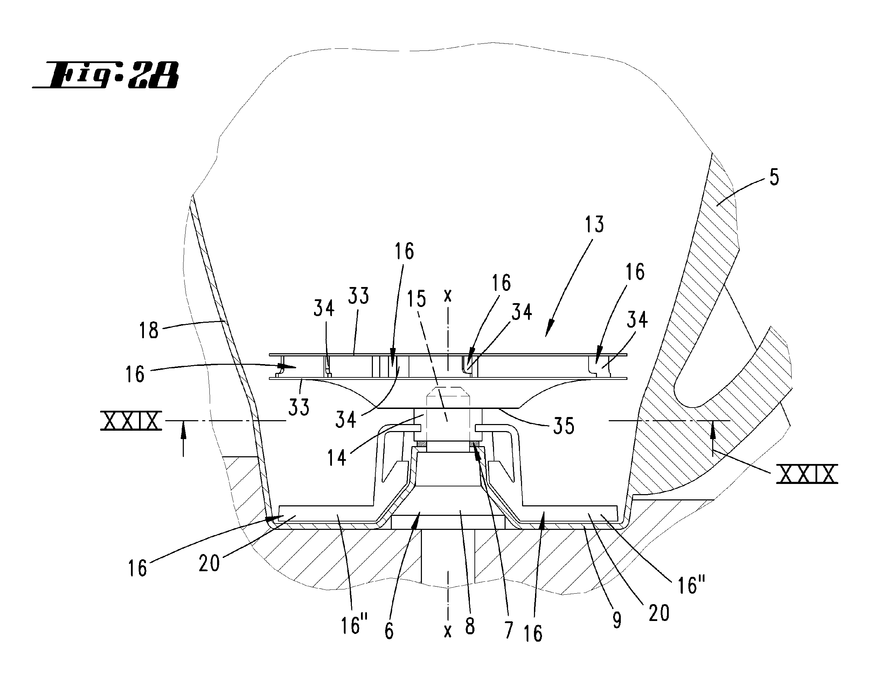

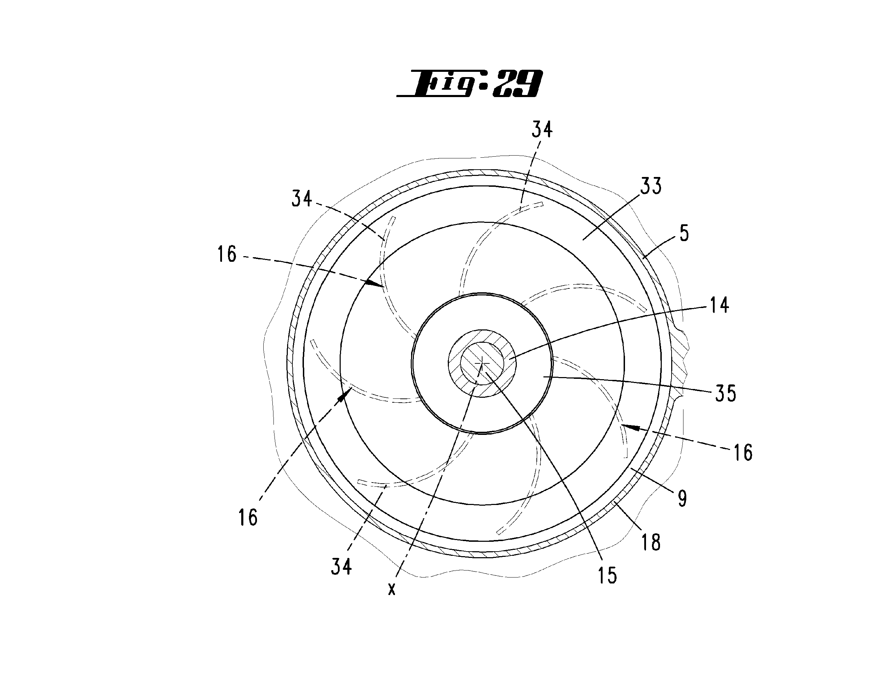

Weiter zeigen die Figuren 28 und 29 eine Ausführungsform, bei welcher mehrere horizontal und im wesentlichen radial ausgerichtete Mischelemente 16 zwischen zwei horizontal verlaufenden und vertikal beabstandeten Plattenteilen 33 eingefasst sind. Deren Drehachse ist zugleich die Rotationsachse x des Rührwerks 6.

Die Mischelemente 16 sind als, die Plattenteile 33 distanzierende, vertikale Stege 34 ausgeformt und verlaufen in Radialerstreckung spiralförmig (vgl. Figur 29).

Während das obere Plattenteil 33 vollständig geschlossen, eine Scheibe ausbildend geformt ist, weist das untere Plattenteil 33 eine zentrale Einlauföffnung 35 auf. Diese umgibt das Rührwerk 6 bzw. den innenseitig vom oberen Plattenteil 33 ausgehenden, die Einlauföffnung 35 durchsetzenden Steckhalterungsabschnitt 14 unter Belassung eines freien, ringförmigen Einlassquerschnittes.

Weiter ist das untere Plattenteil 33 im mittleren Bereich trichterförmig nach unten ausgeformt, so dass der freie vertikale Abstand zwischen den Plattenteilen 33 im mittleren Bereich größer ist als im Randbereich. Entsprechend weisen auch die, die Mischelemente 16 ausformenden Stege 34 eine zum mittleren Bereich des Mischeinsatzes 13 ansteigende Höhe auf.

Über den Steckhalterungsabschnitt 14 ist der so gestaltete Mischeinsatz 13 drehfest dem Rührwerk 6 bzw. dem Messersatz 7 zuordbar.

Der so gebläseradartig gestaltete Mischeinsatz 13 ist durchmessermäßig so gewählt, dass ein radialer Abstand von beispielsweise 15mm zur Rührtopfwandung 18 verbleibt. Der Mischeinsatz 13 ist in der Betriebsstellung weiter so angeordnet, dass dieser auf dem Spiegel des zu bearbeitenden Fluids aufliegt oder mit geringem vertikalen Abstand über diesen Spiegel ausgerichtet ist.

Die Luft wird durch die Rotation des Mischeinsatzes 13 nach radial außen gegen die Rührtopfwandung 18 gepresst, womit das Fluid, beispielsweise die Milch aufgeschäumt wird. Hierbei wird die Luft in das Fluid gepresst, wobei ein feiner Milchschaum entsteht. Auch ist mittels des so gebildeten Mischeinsatzes 13 ein Schlagen von Sahne möglich, die entsprechend gleichfalls mit Luft durchsetzt wird.

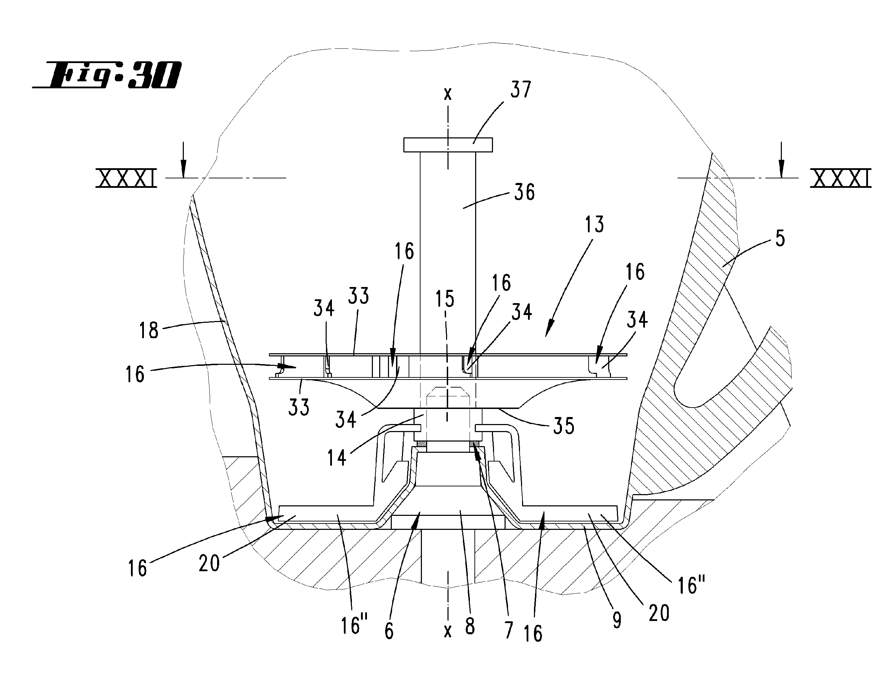

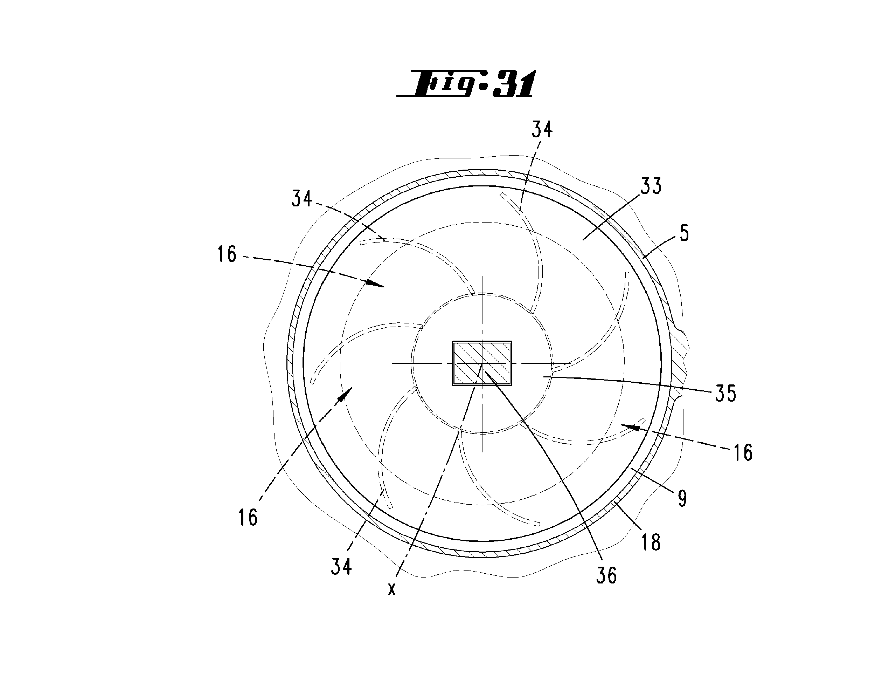

Eine Weiterbildung des so gestalteten Mischeinsatzes 13 ist in den Figuren 30 und 31 dargestellt. Der Steckhalterungsabschnitt 14 ist axial verlängert, durchsetzt das deckenseitige Plattenteil 30 und ragt frei in den Innenraum des Rührtopfes 5. Endseitig ist der so gestaltete Führungsabschnitt 36 mit einem durchmesservergrößerten Anschlagkragen 37 versehen. Der Querschnitt des Führungsabschnittes 36 ist, wie auch die durchsetzte Durchbrechung im mischteilseitigen Deckel unrund, hier rechteckig, womit das Mischelement 14 drehgesichert, jedoch entlang des Führungsabschnittes 36 verlagerbar ist. Mit der Volumenausbreitung des Fluids bewegt sich der gesamte Mischeinsatz 13 nach vertikal oben, wobei die Luft von unten durch die Einlauföffnung 35 aus dem Rührtopf 5 gesogen wird.

### Bezugszeichenliste

- 1: Küchengerät
- 2: Gehäuse
- 3: Bedienfeld
- 4: Drehzahlsteller
- 5: Rührtopf
- 6: Rührwerk
- 7: Messersatz
- 8: Antriebswelle
- 9: Topfboden
- 10: Messer
- 11: Messer
- 12: Deckel
- 13: Mischeinsatz
- 14: Steckhalterungsabschnitt
- 15: Antriebswellenabschnitt
- 16: Mischelemente
- 16': Mischelemente
- 16": Mischelemente
- 16"': Mischelemente
- 16"": Mischelemente
- 17: Tragarme
- 18: Rührtopfwandung
- 19: Halterungsarme
- 20: Schaufelelemente
- 21: Scharnier
- 22: Mischelemente-Bügel
- 23: Querabschnitte

- 24: Bügelabschnitt
- 25: Bügelabschnitt
- 26: Stabilisierungsdraht
- 27: Mischarme
- 28: Mischarme
- 29: Fuß
- 30: Bohrung
- 31: Mischeinsatzteil
- 31': Mischeinsatzteil
- 32: Aufsteckbereich
- 32': Aufsteckbereich
- 33: Plattenteile
- 34: Stege
- 35: Einlauföffnung
- 36: Führungsabschnitt
- 37: Anschlagkragen

- E: Bügelebene
- M: Masse

- x: Rührwerkachse
- y: Scharnierachse

## Patentansprüche

1. Mischeinsatz (13) für einen Rührtopf (5) eines elektromotorisch betriebenen Küchengerätes (1), insbesondere zur Steckhalterung vorzugsweise auf einem angetriebenen Messersatzes (7) des Rührtopfes (5), mit sich radial und/oder axial erstreckenden Mischelementen (16), wobei ein Schaufelelement (20) vorgesehen ist, **dadurch gekennzeichnet, dass** dem Schaufelelement (20) ein sich horizontal erstreckendes Mischelement (16) zugeordnet ist, das einseitig und zumindest in teilweiser Überdeckung zu dem Schaufelelement (20) angeordnet ist.

2. Mischeinsatz nach Anspruch 1, **dadurch gekennzeichnet, dass** ein Mischelement (16) sich radial erstreckt und/oder dass ein Mischelement (16) sich zumindest kreisabschnittsförmig erstreckt.

3. Mischeinsatz nach einem der vorhergehenden Ansprüche, **dadurch gekennzeichnet, dass** das Mischelement (16) schraubengangförmig gebildet ist.

4. Mischeinsatz nach einem der vorhergehenden Ansprüche, **gekennzeichnet durch** eine änderbar wirksame Beaufschlagungsfläche eines Mischelements (16).

5. Mischeinsatz nach Anspruch 5, **dadurch gekennzeichnet, dass** ein Mischelement (16) oder ein Teil eines Mischelements (16) klappbeweglich angeordnet ist.

6. Mischeinsatz nach einem der Ansprüche 5 oder 6, **dadurch gekennzeichnet, dass** sich die Änderung der Beaufschlagungsfläche zufolge einer Zusammenwirkung mit einer in dem Rührtopf (5) befindlichen Masse (M) selbsttätig drehrichtungsabhängig einstellt, wobei, bevorzugt, das änderbare Mischelement (16) um eine sich radial erstreckende Achse (y) oder um eine sich axial erstreckende Achse beweglich ist.

7. Mischeinsatz nach einem der vorhergehenden Ansprüche, **dadurch gekennzeichnet, dass** sich vertikal erstreckende, stabförmige Mischelemente (16) ausgebildet sind, dass die Mischelemente (16) fußseitig in ein radial verlaufendes Schaufelelement (20) übergehen und dass das Schaufelelement (20) über eine vertikale Höhe, die einem Zehntel bis einem Drittel der freien Länge eines Mischelementes (16) entspricht, geschlossen ist.

8. Mischeinsatz nach Anspruch 7, **dadurch gekennzeichnet, dass** Mischelemente (16) parallel verlaufen und/oder dass bezüglich einer Rotationsachse (x) gegenüberliegende Mischelemente (16) nach oben divergieren und/oder dass Mischelemente (16) bezogen auf eine Mischelemente-Vertikalachse wellenförmig verlaufen.

9. Mischeinsatz nach einem der Ansprüche 7 oder 8, **dadurch gekennzeichnet, dass** ein Mischelement (16) federgangartig geformt ist und/oder dass ein Mischelement (16) bügelartig gebildet ist, mit einer Bügelebene (E), die im Querschnitt in einem Winkel zu einer Schaufelelementebene steht, wobei, bevorzugt, der Bügel (22) umlaufend geschlossen ist und/oder die in Drehrichtung (a, b) vorderen Bügelabschnitte (24) unterschiedlich gestaltet sind zu den in Drehrichtung hinteren und/oder dass ein Bügelabschnitt (24, 25) stabförmig gebildet ist, während der andere Bügelabschnitt (24, 25) wellenförmig gebildet ist.

10. Mischeinsatz nach einem der vorhergehenden Ansprüche, **dadurch gekennzeichnet, dass** ein radial äußeres, vertikal verlaufendes Mischelement (16) betrachtet von radial innen konkav gekrümmt verläuft.

11. Mischeinsatz nach einem der vorhergehenden Ansprüche, **gekennzeichnet durch** zwei radial und gegenüberliegend verlaufende Mischarme (27, 28), die mit quer zur Erstreckung der Mischarme (27, 28) ausgerichteten Mischelementen (16) versehen sind.

12. Mischeinsatz nach Anspruch 11, **dadurch gekennzeichnet, dass** die Mischelemente (16) horizontal ausgerichtet sind und/oder dass vier kreuzweise sich zueinander erstreckende Mischarme (27, 28) vorgesehen sind, wobei, bevorzugt, die Mischarme (27, 28) in unterschiedlichen vertikalen Höhen verlaufen und/oder je zwei Mischarme (27, 28) auf einer Höhe verlaufen.

13. Mischeinsatz nach einem der vorhergehenden Ansprüche, **dadurch gekennzeichnet, dass** der Mischeinsatz (13) axial gegenüberliegend zwei Aufsteckbereiche (32, 32') aufweist, wobei, bevorzugt zufolge der zwei Aufsteckbereiche (32, 32') rührtopfbodenseitig je nach Steckrichtung unterschiedliche Mischelemente (16) angeordnet sind und/oder der Mischeinsatz (13) in übereinanderliegenden Bereichen unterschiedlich orientierte Mischelemente (16) aufweist.

14. Mischeinsatz nach einem der vorhergehenden Ansprüche, **dadurch gekennzeichnet, dass** ein oder mehrere Mischelemente (16) zwischen horizontal verlaufenden, vertikal beabstandeten und kreisscheibenförmigen Plattenteilen (33) eingefasst sind, deren Drehachse die Rotationsachse (x) des Rührwerks (6) ist.

15. Mischeinsatz nach Anspruch 14, **dadurch gekennzeichnet, dass** das obere Plattenteil vollständig geschlossen ausgebildet ist und/oder dass das untere Plattenteil (33) eine Einlauföffnung (35) aufweist, die sich umgebend zu dem Rührwerk (6) erstreckt und/oder dass das untere Plattenteil (33) in einem mittleren Bereich trichterförmig nach unten ausgeformt ist und/oder dass ein Mischelemente (16) als ein, die Plattenteile distanzierender, vertikaler Steg (34) ausgebildet ist und/oder dass ein Mischelement (16) in Radialrichtung spiralförmig verläuft und/oder dass die beiden vertikal distanzierten Plattenteile (33) zusammen vertikal bewegbar zu dem Rührwerk (6) angeordnet sind.
